# EUROPEAN PATENT SPECIFICATION

(11) **EP 4 046 478 B1**
(45) Date of publication and mention of the grant of the patent: **25.10.2023**
(21) Application number: 22156618.5
(22) Date of filing: 14.02.2022
(51) Int. Cl.: A01G 9/029, A01G 31/04

(54) **A DEVICE FOR THE FLOATING CULTIVATION OF A PLANT**
VORRICHTUNG ZUR SCHWIMMENDEN KULTIVIERUNG EINER PFLANZE
DISPOSITIF DE CULTURE FLOTTANTE D'UNE PLANTE

(30) Priority: 17.02.2021 BE 202105106
(43) Date of publication of application: 24.08.2022
(73) Proprietor: Inagro, provinciaal EVAP vzw, 8800 Roeselare (BE); Dewilde Engineering NV, 8900 Ieper (BE); REO Veiling CV, 8800 Roeselare (BE)
(72) Inventor: Van de Sande, Tomas, 8000 Sint-Andries (BE); De Cuypere, Tim, 8870 Izegem (BE); Sinaeve, Johan, 8902 Voormezele (BE); Heughebaert, Patrick, 8970 Poperinge (BE); Demyttenaere, Paul, 8890 Moorslede (BE)
(74) Representative: De Clercq & Partners

(56) References cited:
- WO-A1-96/35326
- BR-U- MU8 700 212
- US-A1- 2012 055 086
- US-A1- 2016 270 303
- US-B2- 8 910 418

## Description

### TECHNICAL FIELD

The invention relates to the technical field of a device for the floating cultivation of a plant and to a method for manufacturing, assembling and/or installing the same. Such devices are used in the technical field of agriculture, ornamental plant cultivation and horticulture. In particular in hydroculture or hydroponics, in which plants are cultivated on the basis of water to which the required nutrients are added.

### TECHNOLOGICAL BACKGROUND OF THE INVENTION

A known device for the floating cultivation of a plant is described, for example, in US4312152. This describes a lightweight, floating, panel-shaped carrier which comprises openings for cultivating a plant. The panel-shaped carrier is largely made of a foamed plastic such as polystyrene foam, polyethylene foam, etc. However, such foamed plastics have the drawback that they are not particularly strong and can easily become damaged or deformed during handling, and there is the risk that the water on which they float will become contaminated with components which migrate from the foamed plastic to the water and possibly form a risk with regard to food safety. In particular, plastics based on polystyrene have the drawback that they do not easily decompose naturally which makes recycling more difficult and increases the risk of long-term contamination. In addition, the use of polystyrene bears the risk of toxic substances, such as styrene and/or benzene, being discharged. These substances are a threat to the environment and constitute toxic substances which are associated with the risk of, for example, carcinogenic and/or neurotoxic effects. In particular when polystyrene comes into contact with water, there is the risk that the styrene monomer dissolves in the water and there is thus the risk that such toxic substances come into contact with and/or are absorbed by plants which are being cultivated on such carriers. In order to reduce this risk, such carriers often have to be cleaned with plenty of water for an extended period of time, often a few weeks, before they can be used for the cultivation of plants. It will be clear that such an operation is time-consuming, requires the use of flushing water and carries the risk of the flushing water becoming contaminated with toxic substances. In addition, such materials are not sufficiently strong to be able to withstand, for example, a cleaning operation using a high-pressure water jet. In addition, there is the risk that such foamed plastics absorb water into their structure, which adversely affects their buoyancy. The risk of absorption of water and the fact that thorough cleaning is not possible increase the risk of contamination, the presence and/or growth of harmful or pathogenic organisms, etc. At the bottom of the floating carrier, a lattice or net is attached which supports the plant material in a floating or lifted state. This lattice is made, for example, of a thermoplastic material. This lattice has to be attached to the floating carrier by means of suitable fastening means and there is the risk that, if these fastening means come loose or are overloaded, the lattice becomes detached and all the plants or material fall(s) out of the carrier. In addition, the plant is directly provided as a seedling in a grow block and the plant and the grow block have to be removed together from the openings during harvesting. This is an operation in which both the opening and the grow block are at risk of being damaged and/or soiled.

Another device for the floating cultivation of plants is known from NL 2002527 C2 and US 2012/055086 A1. The device comprises a panel-shaped carrier with continuous openings for receiving a plant container. The floating, panel-shaped carrier is provided with recesses on the bottom side which form gastight chambers in which air is trapped in the floating state of the panel, and is made, for example, from polystyrene material. Such a carrier has the advantage that the buoyancy is not only determined by the buoyancy of the material of the carrier itself, but also by the buoyancy of the gas volume in the chambers on the bottom side of the carrier. However, when positioning such carriers on the water surface, there is the risk that if the carrier is not placed perfectly horizontally on the water surface, not all chambers will contain the same or a suitable amount of gas to keep the carrier horizontal on the water surface. Consequently, there is the risk that the carrier is placed at an angle or obliquely with respect to the water surface and then remains in this less favourable position, which increases the risk of an undesirable variation in the distance between the water surface and the plant situated on the carrier. Similarly, as has already been described above, such materials are also not sufficiently strong to be able to withstand, for example, a cleaning operation using a high-pressure water jet. In addition, there is the risk that such materials likewise absorb water into their structure, which adversely affects their buoyancy. The risk of absorption of water and the fact that thorough cleaning is not possible increase the risk of contamination, the presence and/or growth of harmful or pathogenic organisms, etc.

This problem occurs in particular with carriers whose dimensions increase, in particular in order to maximize the number of plants per carrier, or for example with the floating cultivation of plants in open-air installations and/or agricultural applications which typically involve larger surface areas and dimensions than indoor installations and/or horticultural applications. This problem also occurs, in particular, with the cultivation of plants which are relatively large, tall and/or elongate, such as for example leeks, celery, etc., since in this case, not only the weight increases due to the plant material, but the stability of the device and/or the plant is also put more to the test during cultivation, in particular with open-air installations in which the device and the plant are exposed to atmospheric conditions, such as wind, rain, snow, etc. In addition, in this device rainwater is discharged to the openings in which the holders for the plant material are placed. This may lead to pollution which is present on the panels also being directed towards these openings together with the rainwater, and consequently to the plant, which is undesirable, leading to a risk of pollution and blockage of these openings. In addition, the use of polystyrene makes the carrier difficult to clean.

There is therefore a need for a device which overcomes the abovementioned drawbacks and which can be manufactured and used in a simple and efficient way. Lastly, there is a need for such devices which are stronger so that they can be re-used to a maximum degree, can withstand a relatively intense cleaning operation and also make recycling and the use of recycled material easier.

### SUMMARY

According to a first aspect, a device for the floating cultivation of a plant is provided according to claim 1, the device comprising:
- a panel-shaped carrier comprising:
   - a top wall;
   - mounting openings in the top wall;
   - at least one gastight air chamber which, in a state in which the panel-shaped carrier is floating on a water surface:
      - is surrounded in a gastight manner by one or more downwardly directed air-chamber walls which are provided to the top wall and which form an air-chamber periphery; and
      - is sealed in a gastight manner from the mounting openings by means of downwardly directed mounting walls which form a mounting periphery;
      - is sealed in a gastight manner at the top side by the top wall;
      - is sealed in a gastight manner at the bottom side by the water surface in which the entire air-chamber periphery is placed,
wherein at least one of the gastight air chambers comprises two or more connected air-chamber segments which are separated from each other by one or more downwardly directed air-chamber segment walls which are provided to the top wall, and wherein at least one air-chamber segment wall is configured in such that, in the floating state, the air pressure in connected segments can equalize.

The connected gastight air-chamber segments ensure that the carrier can be stabilized after it has been placed on the water surface or if it is at an angle to the water surface due to possible loads. This is a simple way of producing a strong carrier which can easily be used even in the case of relatively large dimensions or when relatively large, tall and/or heavy plants are cultivated on the carrier, which is particularly advantageous for cultivating plants in open-air installations. The use of the gastight chambers makes it possible to provide maximum buoyancy to the carrier while using a minimal amount of material for the carrier, and also makes it possible to produce a carrier of minimal weight, so that the buoyancy can be used to the fullest possible extent to support the weight of the plants. In this case, it is clear that, in the floating state, the carrier floats on the water surface and, preferably, does not or hardly rests on the bottom or another element of or on the water reservoir. In other words, the weight of the device is supported virtually entirely by the water surface. This means that, for example, 80% or more, preferably 90% or more, preferably 95% or more of the weight of the device, in particular the carrier, and the plants and any plant containers arranged thereon, is transferred to the water surface.

It will be clear that the floating cultivation of plants, also referred to as hydroculture or hydroponics, may offer additional advantages, in particular for certain agricultural crops which are typically cultivated in the open field, such as for example leeks, etc. since the floating cultivation of such plants would enable a larger number of growing cycles per year. Thus, when growing leeks in the open field, typically only one annual growing cycle can be completed, whereas the floating cultivation of leeks would, for example, make two or three growing cycles per year possible, as the floating cultivation of such plants may reduce the time required for growing. With the floating cultivation of plants, depletion of the necessary nutrients does not have to be taken into account. In addition, with the floating cultivation of plants, no additional time-consuming operations are required to counteract depleting the soil of the necessary nutrients. The reason for this is that with the floating cultivation of such plants, the plants can be supplied more directly with the nutrients, for example via the water. It will be clear that a supply of nutrients is achieved in this way which reduces the risk of losing some of these nutrients in deeper layers of the ground or of these nutrients being washed out of the ground.

According to an embodiment, the mounting openings are configured for placing a plant container. In this case, for example, the periphery of the mounting openings adjoins the periphery of the plant container in such that, in the mounted position, the plant container is held in a desired position by the mounting opening when the plant container is at least partly introduced in the mounting opening.

Such an embodiment simplifies for example the installation and/or removal of the plant on the carrier, and makes it possible, for example, to cultivate plants whose height is greater than the thickness of the carrier, in particular elongate plants, such as, for example, leeks, celery, etc. Such embodiments are suitable, for example, for cultivating one or more of the following plants, for example, from this non-limiting list:
- a plant from the genus *Allium,* such as for example leek (*Allium porrum*)*,* onion (*Allium cepa, Allium fistulosum,* etc.), garlic (*Allium sativum*)*,* etc.
- a plant from the family of the parsley family also referred to as *Apiaceae* or *Umbelliferae,* such as for example celery (*Apium graveolens*)*,* fennel (*Foeniculum vulgare*)*,* chervil (*Anthriscus cerefolium*)*,* etc.
- a plant from the family of the *Amaranthaceae,* such as for example spinach (*Spinacia oleracea*)*,* etc.
- a plant from the family of the *Brassicaceae* (cruciferae), such as for example Chinese cabbage (*Brassica rapa* var. *pekinensis*)*,* etc.

According to alternative embodiments, it is possible to use the device for the floating cultivation of any suitable plant known in agriculture and horticulture, such as, for example, also for plants from ornamental plant cultivation, herbs, etc.

According to alternative embodiments, the mounting openings are configured for placing a plant and/or a removable element for the floating cultivation of a plant.

According to an embodiment, a device is provided in which, in a sealed state in which the water surface seals the entire air-chamber periphery:
- the air chamber is configured such that the amount of gas in the air chamber remains constant; and
- at least one air-chamber segment wall of the connected air-chamber segments is configured such that an amount of gas can be exchanged between the connected air-chamber segments.

In this way, a skew position of the carrier may be compensated for.

According to an embodiment, a device is provided in which at least one air-chamber segment wall of the connected air-chamber segments:
- comprises an opening and/or a duct which is configured to exchange gas between the connected air-chamber segments; and/or
- comprises at least a part which extends less far downwards from the top wall than the minimum depth of the air-chamber periphery.

This makes it possible to produce the connected air-chamber segments in a simple, sturdy and efficient way.

According to an embodiment, a device is provided in which a stopper is provided in and/or on the mounting walls of the mounting opening and is configured to limit the maximum depth to which a plant container can be inserted into the mounting opening.

This ensures a reliable and secure locking of the plant container.

According to an embodiment, a device is provided in which:
- at least the stopper and the mounting walls of the mounting opening are made as a single piece;
- the carrier is made as a single piece;
- the stopper is furthermore configured to, in a mounted position, support the plant in a plant container provided in the mounting opening; and/or
- the device does not comprise separate elements which are configured to support, in a mounted position, the plant in the plant container and/or the plant container in the mounting opening.

This makes it possible to produce the carrier and the plant container in a simple manner.

According to an embodiment, a device is provided in which the stopper is provided:
- at a predetermined distance from the top end of the top wall;
- in a floating state, at a predetermined distance from the water surface; and/or
- on or at a predetermined distance from the bottom end of the opening periphery of the opening.

In this case it will be clear that "at a predetermined distance from the water surface" comprises the following possibilities: at a certain distance above or below the water surface, and/or on the water surface.

According to an embodiment, a device is provided in which the predetermined distance is determined as a function of the plant which is placed in the plant container.

According to an embodiment, a device is provided in which the predetermined distance is in the range from 5% to 500% of the height of the air-chamber periphery of the air chamber of the carrier, for example in the range from 10% to 150%.

This makes it possible to achieve an optimum positioning of the plant with respect to the water surface in a simple manner.

According to an embodiment, a device is provided in which the stopper comprises:
- one or more openings for the water surface and/or which provide a passage to the water surface;
- a lattice with one or more openings; and/or
- one or more mounting elements configured for mounting and/or anchoring a plant container.

This makes it possible to produce the stopper in a simple way which also makes it possible to secure a plant container in an efficient and/or reliable way.

According to an embodiment, a device is provided in which the mounting openings in the top wall are surrounded by an upright edge which is configured to prevent the ingress of water from the top side of the top wall into the mounting opening; and/or the mounting openings in the top wall are surrounded by a guide element and/or comprise a guide element which is configured to guide the plant container towards the opening during its introduction.

This ensures that the risk of undesired pollution and/or blockage of the openings for the plant container is reduced, in particular with open-air installations, in which the carriers are exposed to, for example, incident rainwater and pollution carried along by the wind.

According to an embodiment, a device is provided in which the device furthermore comprises:
- one or more drainage openings which are provided in the top wall separately from the mounting openings; and
- one or more downwardly directed drainage walls which are provided on the top wall and form a drainage periphery for the drainage opening, and
in which the at least one gastight air chamber, in a state in which the panel-shaped carrier is floating on a water surface, is sealed from the drainage openings in a gastight manner by means of the downwardly directed drainage walls which form a drainage periphery.

This ensures that the risk of undesired discharge of contamination to the openings for the plant container is reduced, in particular in open-air installations. This reduces the risk of undesired seeds, such as for example weed seeds, undesired contamination, etc., which have an adverse effect on the plant, being able to accumulate in or near the mounting openings, where there is the risk that the plant comes into contact with this undesired matter, and/or the development of the plant is adversely affected. In addition, these separate drainage openings ensure that, for example, rainwater cannot collect on the carrier and this reduces the risk of the additional weight of this water adversely affecting the position of the carrier.

According to an embodiment, a device is provided which comprises one or more carriers, preferably comprises two or more carriers, in which the carrier comprises coupling elements which are configured to removably couple and/or hook together neighbouring carriers on a water surface.

Such coupling elements are advantageous since they make it possible to provide a device comprising several carriers, with relatively large surfaces in particular in an adjoining way, on the water surface, which increases the stability of the device as a whole. This reduces the risk of individual carriers toppling over, for example as a result of wind loads, in particular when cultivating elongate plants in open-air installations.

According to an embodiment, a device is provided in which the one or more air chambers are configured such that, when placing the device on the water surface, water is able to penetrate into at least a part of the air chambers until a sealed state is reached in which the water surface seals the entire air-chamber periphery.

In this way, it is possible to produce an air chamber for the carrier using a minimum of materials, in which the water surface is also efficiently brought in the vicinity of the plants secured on the carrier. As a result thereof, the amount of material used in manufacturing the carrier can be reduced, thus optimizing the impact on the environment, the options for re-use and/or recycling.

According to an embodiment, a device is provided in which the device furthermore comprises one or more plant containers which are configured to be provided in the mounting openings.

According to alternative embodiments, the plant containers may also be designed so as to form a single unit with the carrier or the carriers may be used in such a way that plants are grown directly in the mounting openings, with the mounting openings also fulfilling the function of plant container.

According to an embodiment, a device is provided in which the plant container is elongate and tubular and in which the length of the plant container is greater than the diameter of the plant container, preferably greater by a factor of two or more, preferably greater by a factor of five or more.

In this way, elongate, large plants, such as for example leeks, celery, etc. can be grown in a stable and efficient way and a hydroculture for these plants, for example in open-air installations, may be provided with carriers whose dimensions are sufficiently large to make it possible to efficiently cultivate such plants on relatively large surface areas.

According to an embodiment, a device is provided in which the plant container:
- consists of one piece; and/or
- does not comprise a stopper, screen and/or lattice which is configured to support the plant in the secured state.

This makes it possible to manufacture the plant container in a very efficient and simple way, since it may, for example, consist of an elongate hollow tube.

According to an advantageous embodiment, the carrier is made in one piece, and/or the carrier consists of a single material. Preferably, the carrier consists of one of the following materials:
- a plastic;
- a recyclable plastic;
- polyethene or polyethylene;
- high-density polyethylene or HDPE;
- polypropylene carbonate or PPC.

According to a preferred embodiment, the carrier and/or the plant container is made of, and/or the carrier and/or the plant container consist of a material of which:
- the light transmission, as expressed by means of the transmission factor or transmission, that is to say the portion of the incident radiation flux or light flux that completely penetrates the material of the carrier and/or the plant container, is in the range of 50% or less, preferably 20% or less, for example 10% or less; and/or
- the light impermeability, as expressed by means of the opacity, that is to say the portion of the incident radiation flux or light flux that is dimmed or blocked by the material of the carrier and/or the plant container, is in the range of 50% or more, preferably 80% or more, for example 90% or more.

In particular with the floating cultivation of leeks or similar plants, in which a part of the plant has to be screened off from incident light in order to achieve a desired colour effect, it is advantageous if this part of the plant is screened off from incident light by the plant container and/or the carrier.

According to a preferred embodiment, the above-described ranges for the light transmission and/or light impermeability apply in particular for ultraviolet radiation, also known as UV radiation.

According to a second aspect, a method for manufacturing, assembling and/or installing a device according to the first aspect is provided, according to claim 15, in which the carrier is produced as a single piece.

In this way, the carrier can be produced efficiently and additional steps for assembly of the device are minimized.

According to an advantageous embodiment, a method for manufacturing the single-piece carrier from a single material is provided.

This makes it possible to render manufacture efficient and is also advantageous to make recycling at the end of the useful service life of the carrier easier.

According to an advantageous embodiment, the single-piece carrier is made of one of the following materials:
- a plastic;
- a recyclable plastic;
- polyethene or polyethylene;
- high-density polyethylene or HDPE;
- polypropylene carbonate or PPC.

Such materials are readily recyclable and are environmentally friendly since carbon dioxide is fixed during the production thereof, they can be produced from renewable raw materials and/or they are relatively readily biodegradable.

In addition, the use of the air-chamber walls and/or air-chamber segment walls makes it possible to use a relatively thin and flexible plastic since these walls act as supporting ribs which ensure the carrier has sufficient stiffness.

Such materials are also particularly suitable for use in efficient production methods, such as for example injection-moulding.

It will be clear that further variants and/or combinations of the embodiments described here are possible, in particular with regard to the different embodiments of the different aspects of the invention.

### DESCRIPTION OF THE FIGURES

The accompanying figures show a few embodiments without being limited thereto.
Fig. 1 shows a perspective view of an embodiment of a device for the floating cultivation of a plant;
Fig. 2 shows the detail A from Fig. 1 on an enlarged scale;
Fig. 3 shows the embodiment from Fig. 1 in a perspective view which shows the bottom side;
Fig. 4 shows the detail C from Fig. 3 on an enlarged scale;
Fig. 5 shows a cross section along line V-V in Fig. 4;
Fig. 6 shows a side view of the embodiment of the device 1 according to Figs. 1 to 5;
Fig. 7 shows a perspective view on the bottom side of an alternative embodiment;
Fig. 8 shows a bottom view of detail D from Fig. 7 on an enlarged scale;
Fig. 9 shows a bottom view of a variant embodiment;
Fig. 10 shows a bottom view of detail E from Fig. 9 on an enlarged scale;
Figs. 11 and 12 show perspective views of a cross section along line XI-XI in Fig. 10;
Figs. 13 and 14 show perspective views similar to Figs. 11 and 12 of an alternative embodiment;
Figs. 15 and 16 show a top view and a side view of an embodiment of a device comprising several carriers 10;
Figs. 17 to 19 show embodiments of a plant carrier in greater detail; and
Figs. 20 and 21 respectively show a bottom view and a top view of an embodiment of a device which comprises several carriers;
Figs. 22 and 23 show a side view a alternative embodiments of a device which comprises several carriers.

### DETAILED DESCRIPTION

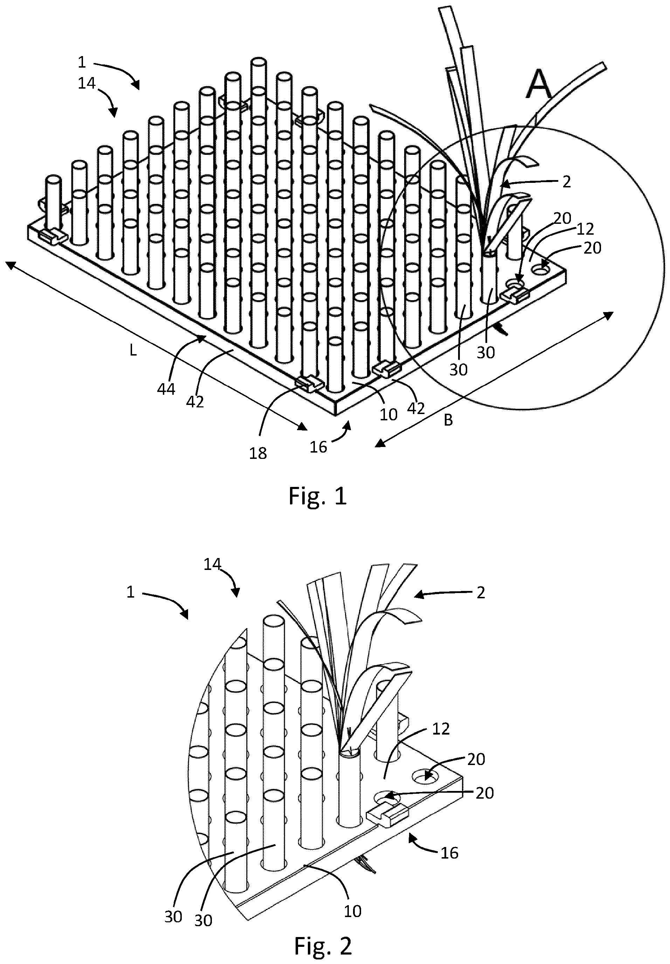

Fig. 1 shows an embodiment of a device 1 for the floating cultivation of a plant 2. According to the illustrated embodiment, the plant 2 comprises, for example, leeks, which is an elongate and relatively large plant which is typically grown on a large scale in the open air. However, it is clear that, according to alternative embodiments, the device 1 may also be used for the floating cultivation of other plants, such as other plants which are grown in open-air installations and/or indoor installations by means of agriculture and/or horticulture and/or ornamental plant cultivation.

As can be seen, the illustrated embodiment of the device 1 comprises a panel-shaped carrier 10 and a top wall 12. The panel-shaped carrier 10 is shown in Fig. 1 in a perspective view which illustrates the top side 14, also referred to as upper side, of the device 1. In the illustrated position, which corresponds to the position of the device 1 when it is floating on the water surface, also referred to as the floating position on the water surface, this top wall 12 of the carrier 10 thus forms the wall of the carrier which is situated on the upper side of the carrier. In the floating position, this top wall 12 therefore comprises an upwardly directed side which faces away from the water surface and a downwardly directed side which faces the water surface. The top wall 12 is for example made of a suitable plastic and in this case the wall thickness of the top wall 12 is typically in the range from 0.5 mm to 20 mm, for example 1 mm to 10 mm, preferably 1 mm to 3 mm, for example 2 mm or virtually 2 mm.

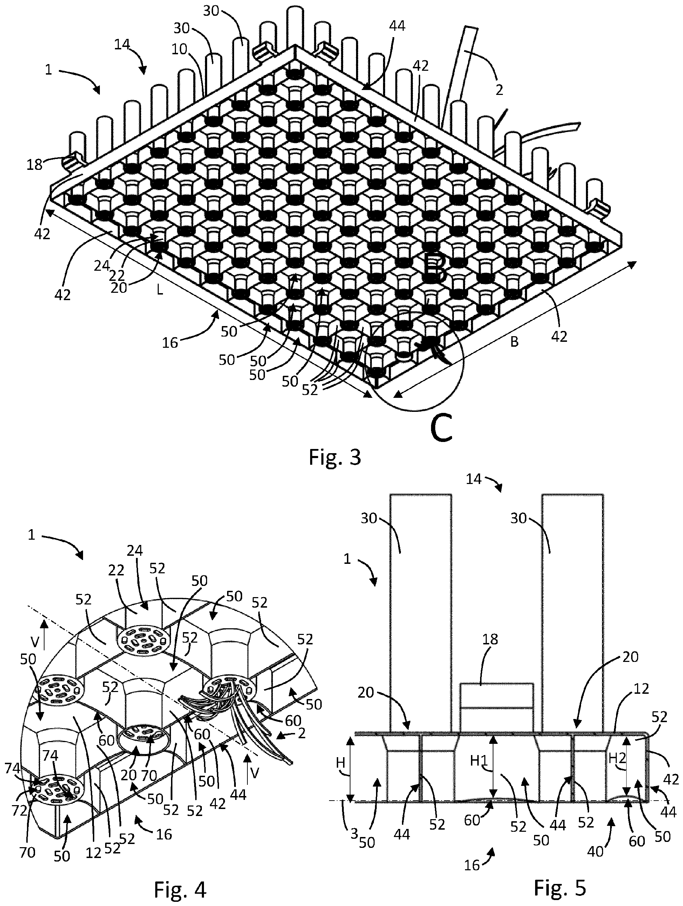

As can be seen in Fig. 1 and which the detail A in Fig. 2 shows on a slightly enlarged scale, mounting openings 20 are provided in the top wall 12. As can be seen, the mounting openings 20 in the top wall 12 are configured for placing a plant container 30. As is furthermore illustrated, these mounting openings 20 form a continuous opening from the top side of the top wall 12 to the bottom side of the top wall 12, as is furthermore illustrated, for example, by means of Figs. 3 to 5. It will be clear that in the embodiment and position illustrated in Fig. 1 and Fig. 2, two mounting openings 20 are illustrated in a position in which no plant container 30 has been provided. In all other mounting openings 20, a plant container 30 has been provided. By way of example, an elongate plant 2, such as leeks, is schematically shown in one of the plant containers 30 in Fig. 1 and Fig. 2. As is furthermore described in greater detail, the illustrated embodiments of the plant containers 30 are elongate and tubular. According to the illustrated embodiment of the device 1, the top wall 12 of the panel-shaped carrier 10 is rectangular. The mounting openings 20 are situated equidistant from one another in accordance with a matrix, in which a series of twelve mounting openings 20 is provided along the length direction L of the panel-shaped carrier 10. A series of nine mounting openings 20 is provided along the width direction B, perpendicular to the length direction, in the top wall 12 of the panel-shaped carrier 10. This therefore results in a matrix of twelve times nine mounting openings 20 which are provided in the top wall 12 of the panel-shaped carrier 10 according to this embodiment. However, it will be clear that alternative embodiments are possible in which any suitable plurality of mounting openings 20 is provided in the top wall 12 of the panel-shaped carrier 10. It will furthermore be clear that the pattern in which the mounting openings 20 are provided in the top wall 12 may, according to alternative embodiments, differ from the grid-like pattern of the illustrated exemplary embodiments. Thus, for example, any suitable pattern, such as, for example, an alternating, offset, diamond-shaped, circular, etc. pattern in which the mounting openings are provided on the carrier during cultivation as a function of a suitable arrangement of the plants may be provided. It will furthermore also be clear that the top wall 12 of the panel-shaped carrier 10 may also be any other suitable shape than a rectangle. It is furthermore also possible for the panel-shaped carrier 10to be in the form of, for example, an elongate structure, in which for example only one row or series of mounting openings 20 is provided, and in which the length L of the carrier 10 is greater by a factor of five or more, or ten or more, than the width B of the carrier 10. However, it will be clear that the panel-shaped carrier 10 is particularly advantageous if the length and the width make it possible to provide several mounting openings 20 at a desired distance next to each other, since this results in the number of plants which can be grown, transported, etc., on one single carrier being more optimal. The length L of the illustrated exemplary embodiment is, for example, 1.5 m and the width B of the illustrated exemplary embodiment is, for example, 1.125 m. Such dimensions are advantageous as they correspond to conventional dimensions for pallets or other stacking means or transport means, which simplifies transportation and storage. However, it will be clear that alternative dimensions for the length L and/or the width B of the panel-shaped carrier 10 are possible. According to the illustrated exemplary embodiment, the centre-to-centre distance between the mounting openings 20 is 0.125 m x 0.125 m, but it will be clear that alternative embodiments are possible in which a different suitable distance between neighbouring mounting openings 20 is used and/or in which this distance does not necessarily have to be regular and/or uniform for all neighbouring mounting openings 20. Thus, the distance between the mounting openings along the length direction may differ from the distance along the width of the carrier, or the mounting openings may be provided offset, that is to say, for example, not on one line along the width direction and/or the length direction, or alternating, or according to a diamond-shaped pattern, etc. or according to any other suitable pattern.

According to the illustrated embodiments, the periphery of the mounting opening 20 is similar to the outer periphery of the plant container 30 and thus circular. However, it will be clear that alternative embodiments of the shape and/or the periphery of the mounting opening 20 and a plant container 30 to be arranged therein are possible, such as any suitable polygon, or enclosed periphery comprising one or more curved segments, etc. It will furthermore be clear that, in the illustrated exemplary embodiment, the periphery of the mounting opening 20 and the plant container 30 are both circular, although according to alternative embodiments, both peripheries do not necessarily have to be of the same type, as long as the mounting opening 20 is configured to at least partly accommodate the plant container 30 and/or to keep it in a secured position.

It will be clear that, according to the illustrated exemplary embodiment, the plant 2 is an elongate plant 2 which is held upright, that is to say having a vertical longitudinal axis, in the mounting opening 20 on the carrier 10 by means of the plant container 30. The embodiment of the carrier 10 and the plant container 30 is particularly suitable for plants having a length of 0.15 m or more, for example 0.2 m or more, in particular 0.3 m or more. However, it is clear that the device 1 and/or parts thereof as described here may also be used advantageously for alternative plants 2, for example plants 2 which are not considered to be elongate, such as for example lettuce or leafy vegetables, etc. and/or in general for every plant in agriculture and/or horticulture and/or ornamental plant cultivation which is suitable for being grown on a device 1 for the floating cultivation of plants.

Fig. 3 shows the embodiment from Fig. 1 with a view which shows the bottom side 16 of the device 1 more clearly. In particular, Fig. 3 shows the carrier 10 of this device 1. As can be seen from the bottom side 16, the carrier 10 comprises a gastight air chamber 40 which, in a floating position of the panel-shaped carrier 10 on a water surface 3, is surrounded or enveloped by air-chamber walls 42 which form an air-chamber periphery 44. According to the illustrated exemplary embodiment, the gastight air chamber 40 is surrounded by four adjoining, downwardly directed air-chamber walls 42 which form or surround the periphery of the top wall 12 and thus form an air-chamber periphery 44 for the air chamber 40 which is formed on the bottom side 16 of the carrier 10.

It will be clear that the air chamber 40, in the floating position, is sealed on the bottom side 16 in a gastight manner by the water surface 3 in which the entire air-chamber periphery 44 is placed. As can be seen more clearly in the detail from Fig. 4 and in the cross section along line V-V in Fig. 4 as illustrated in Fig. 5, the embodiment as illustrated in Figs. 1 to 5 comprises an air chamber 40 which is surrounded by an air-chamber periphery 44 which is formed by adjoining air-chamber walls 42 which surround the air chamber 40. In this case, it will be clear that the air-chamber walls 42 are provided on the top wall 12 and are directed downwards. This means that, in the floating position situated on the water surface 3, the air-chamber walls 42 extend downwards from the bottom side of the top wall 12. As can be seen in Fig. 5, these air-chamber walls 42 which form the air-chamber periphery 44 extend along a height direction H at right angles to the plane formed by the length direction L and the width direction B of the top wall 12 of the carrier 10. In this case, it is clear that the height H, that is to say the distance along this height direction H of the air-chamber walls 42 in relation to the top wall 12 is greater than the thickness of the top wall 12. With this embodiment of the carrier 10 with a flat top wall 12, but also with alternative embodiments which comprise, for example, differences in height in the top wall 12, the height H may be determined as the minimum distance between the top end of the top wall 12 and the bottom end of the air-chamber walls 42 which form an air-chamber periphery 44 for an air chamber 40. It will be clear that, in the illustrated embodiment, this height H between the top wall 12 and the bottom side of the air-chamber periphery 44 is constant or virtually constant along the entire air-chamber periphery 44. According to the illustrated embodiment, the height H is, for example, in the range from 10 mm or more, for example 20 mm or more, preferably in the range from 20 mm to 70 mm. The height H is, for example, a factor of 5 or more, for example a factor of 10 or more, preferably a factor of 20 or more, for example a factor in the range from 20 to 40 times greater than the thickness of the top wall 12 of the carrier 10. It will furthermore be clear that the bottom side of the air chamber 40 is sealed in a gastight manner by the water surface 3 in which the entire air-chamber periphery 44 is placed or, in other words, the air chamber 40 is surrounded by an adjoining periphery formed by the air-chamber walls 42. It will be clear that the air chamber 40 is, in addition, sealed in a gastight manner at the top side by the top wall 12.

Finally, the air chamber 40 is sealed in a gastight manner from the mounting openings 20 in the top wall 12. This is achieved by means of downwardly directed mounting walls 22 which form a mounting periphery 24. As can be seen, this mounting periphery 24 forms a virtually cylindrical downwardly directed tube which extends from the top wall 12 to the bottom side 16 of the carrier 10. According to the illustrated exemplary embodiment, the mounting walls of the mounting periphery 24 also extend across the same height H as the air-chamber periphery 44. It will therefore be clear that, in a position situated on the water surface, as illustrated for example in Fig. 5, the bottom side of the mounting periphery 24 and the air-chamber periphery 44 is situated entirely in the water surface 3 and thus seals the air chamber 40 in a gastight manner together with the top wall 12 and the water surface 3 itself. The air, or the gas, in the air chamber 40 cannot escape from this air chamber 40, not via the mounting openings 20 in the top wall through the mounting periphery 24 and not laterally, to a position next to the air chamber 40 and/or next to the carrier 10 and/or from between the water surface 3 and the top wall 12 through the air-chamber periphery 44.

As can furthermore be seen in Figs. 3 to 5, the carrier 10 comprises one air chamber 40 whose air-chamber periphery 44, according to this embodiment, corresponds to or virtually corresponds to the periphery of the top wall 12. However, it will be clear that alternative embodiments are possible, in which carrier 10 comprises two or more, or any suitable plurality of separated air chambers 40 which each comprise a corresponding air-chamber periphery 44 and for example each form an air chamber whose periphery only surrounds a part of the surface of the top wall 12.

As can be seen in Figs. 3 to 5, according to this embodiment, the gastight air chamber 40 comprises several connected air-chamber segments 50. As can be seen, the connected air-chamber segments 50 are separated from one another or delimited by means of air-chamber segment walls 52. According to the illustrated exemplary embodiment, square or rectangular or virtually square or rectangular air-chamber segments 50 are thus formed in which the mounting openings 20 and their associated mounting periphery 24 are positioned at the location of the corners. It will therefore be clear that the air chamber 40 contains a plurality of these connected air-chamber segments 50. Although here the number of connected air-chamber segments 50 is determined by the number of mounting openings 20, it will be clear that alternative embodiments are possible in which any suitable number of air-chamber segments 50 is present in the air chamber 40. With such embodiments, at least one of the gastight air chambers 40 of the carrier 10 preferably comprises two or more connected air-chamber segments 50.

Two neighbouring connected air-chamber segments 50 are connected to each other since they are separated from each other by one or more downwardly directed air-chamber segment walls 52 which are provided on the top wall 12. In a way similar to the air-chamber walls 42 and the mounting walls 22, such an air-chamber segment wall 52 thus extends in a downward direction from the bottom side of the top wall 12 in the direction of the bottom side 16 of the carrier 10 when the carrier 10 is in a floating position on the water surface. However, in contrast with the air-chamber walls 42 and the mounting walls 22, which form the air-chamber periphery 44 and the mounting periphery 24 which seal the air chamber 40 in a gastight manner together with the top wall 12 and the water surface 3, at least one air-chamber segment wall 52 is configured such that the air pressure in connected air-chamber segments 50 can equalize in the floating position. It will therefore be clear that in a sealed state, in which the water surface closes off the entire air-chamber periphery 44, the air chamber 40 is configured such that the amount of gas in the air chamber 40 remains constant, but the connected air-chamber segments 50 are still able to exchange an amount of gas between one another. To this end, at least one air-chamber segment wall 52 of the connected air-chamber segments 50 is configured such that an amount of gas can be exchanged between the connected air-chamber segments 50.

According to the illustrated exemplary embodiment in Fig. 5, this is achieved by making the air-chamber segment walls 52 on the bottom side arcuate. As a result thereof, the minimum height H1, H2 of these air-chamber segment walls 52 is smaller than the height H of the air-chamber walls 42. As can be seen in Fig. 5, this produces, in the floating position of the carrier 10 on the water surface 3, an opening 60 above the water surface 3 which makes it possible to exchange gas or air between neighbouring connected air-chamber segments 50 via this opening. It will be clear that alternative embodiments are possible in which at least one air-chamber segment wall 52 of the connected air-chamber segments 50 comprises at least a part which extends less far downwards from the top wall 12 than the minimum depth of the air-chamber periphery 44. Further alternative embodiments, in which any suitable opening 60 or duct is provided in at least one air-chamber segment wall 52 of connected air-chamber segments 50 for exchanging gas between the connected air-chamber segments 50 are also possible, for example even without the height, or depth, of the air-chamber segment walls 52 and the air-chamber periphery 44 necessarily having to differ from one another.

According to the illustrated exemplary embodiment, it will be clear that not all air-chamber segments 50 and/or air-chamber segment walls 52 have to be of identical design. As can be seen in Fig. 5, the air-chamber segment walls 52 which are closest to the periphery or side of the carrier 10 have a smaller minimum depth, or height H2, than air-chamber segment walls 52 which are at a greater distance from that periphery or side of the carrier 10. In other words, the opening 60 in the air-chamber segment walls 52 which is closest to the periphery or side of the carrier 10 is slightly greater than the opening 60 in the air-chamber segment walls 52 which are further from the periphery or side of the carrier 10. This is advantageous since, when the carrier is in a skew position and/or tilted with respect to the water surface 3, for example when placing the carrier 10 on the water surface, or due to atmospheric loads which act on the device 1, the effects on the air pressure or the amount of gas in air-chamber segments 50 closest to the periphery or side of the carrier 10 will be greatest, and the need to exchange gas in order thus to equalize the air pressure in the connected air-chamber segments 50 and at least partly compensate for the skew position and/or tilt will be greatest there.

According to the illustrated exemplary embodiment, as can best be seen in the detail from Fig. 4, a stopper 70 is provided in and/or on the mounting walls 22 of the mounting opening 20. As can be seen, this stopper may, for example, be arranged at the bottom of the mounting walls 22. By way of example, a stopper 70 has also been shown which is arranged in the cylindrical mounting opening 20 at a certain distance from the bottom side of the mounting walls 22. However, it will be clear that still other alternative embodiments are possible, in which a stopper 70 is provided in or on the mounting walls 22 and is configured to limit the maximum depth to which a plant container 30 can be inserted into the mounting opening 20. It will be clear that, according to the illustrated embodiment, the plant container 30 is installed in the mounting opening 20 so as to be removable. In this case, the bottom side of the plant container 30 is held by the stopper 70, as is shown.

According to the illustrated exemplary embodiment, the carrier is preferably designed so as to form a single piece, for example as a single-piece element which is made from a suitable plastic or another suitable material. The carrier may be made, for example, by means of a suitable injection-moulding method or another suitable method, such as for example an injection method, an injection-compression method, etc. for forming such a single-piece carrier 10. Such a single-piece carrier 10 which is made from a single material is advantageous, as this simplifies manufacturing and recycling of such a carrier. A single-piece carrier 10 which is made from a suitable plastic, such as for example polyethene or polyethylene, more specifically high-density polyethylene or HDPE, since such materials can readily be recycled, or for example polypropylene carbonate or PPC, which is also an environmentally friendly plastic, as carbon dioxide is fixed during the production thereof, it can be manufactured from renewable raw materials and is relatively readily biodegradable. Some specific examples of suitable materials are, for example, PPC mfi 15 SR 79, PPC mfi 38 AZ764, HDPE mfi 30 hma 018, HDPE mfi 8 hma 035, HDPE mfi 4 M40060 s, but it will be clear that alternative suitable materials are likewise possible, in particular materials which are certified food-safe. Such materials also make it possible to easily clean the carrier 10 before or after use, in particular compared to carriers which use a foamed plastic, which are too fragile to be able to be cleaned by means of, for example, a high-pressure water jet.

Although it is advantageous to produce the entire carrier 10 as a single piece in order to efficiently make large-scale production of the carrier 10 possible, it will be clear that alternative embodiments are possible in which one or more components of the carrier 10 are provided to the carrier 10 as separate elements. However, it will be advantageous to at least make the stopper 70 and the mounting walls 22 of the mounting opening 20 as a single piece, in order to avoid a stopper 70 having to be provided, provided, assembled, etc. in every mounting opening 20 of the carrier 10, which is a time-consuming and/or labour-intensive operation, in particular with embodiments comprising a large number of mounting openings 20 per carrier.

As can best be seen in Fig. 4, the stopper 70 is designed as a lattice or screen with openings 72. Via these openings 72, the water surface can access the space within the mounting walls 22 of the mounting openings 20, as illustrated, for example, in Fig. 5. These openings 72 also provide a passage to the water surface, such as for example for the roots of the plant 2, as is illustrated in Fig. 4. As will be described in more detail below, the stopper 70 according to this embodiment also comprises optional mounting elements 74 for mounting an alternative embodiment of a plant container or an insert therefor. It will be clear that alternative embodiments of the stopper 70 are possible, and the stopper does not necessarily have to be a lattice, the stopper may, for example, comprise one or more projections, a shock-absorbing edge, etc. which are configured to retain the plant container 30 in the mounted position in the mounting opening 20. Preferably, the stopper 70 comprises at least one opening 72 for the water surface 3 or access thereto.

In the illustrated embodiment, the stopper 70 is furthermore configured to, in a mounted position, support the plant 2 in the plant container 30. As will be described in more detail below, this is advantageous since it makes it possible to use a simple plant container 30 which may have the form of, for example, a simple elongate open tube, without having to provide the plant container 30 itself with means to support the plant in the mounted position on the carrier 10. This is advantageous, in particular when the device is used on relatively large surfaces, and in view of the fact that a plurality of plant containers 30 is mounted to a carrier 10, since the plant containers 30 can thus be produced as efficiently and simply as possible. As is illustrated in Fig. 4, the plant 2, in this case the leek, rests on the top side of the stopper 70 and the roots are able to reach the water surface 3 via the openings 72. How far down in the water surface 3 or how far above the water surface the stopper 70 is situated in the floating state, as is illustrated in for example Fig. 5, will depend on the distance of the stopper 70 with respect to the top wall 12. As is illustrated, this distance may correspond to the height H of the mounting periphery 24 of the mounting wall 22 of the mounting opening 20, if the stopper 70 is provided at the bottom of this mounting wall 22. However, for one of the openings 20, an alternative positioning is illustrated in which the stopper 70 is provided at a different predetermined distance from the top wall 12 and/or the water surface 3. As is illustrated, this distance is smaller than the height H. For example 5% or more smaller, for example 10% or more smaller than the height H. According to alternative embodiments, this predetermined distance may be in the range from, for example, 5% to 500% of the height of the air-chamber periphery 44 of the air chamber 40 of the carrier 10, for example in the range from 10% to 150%, preferably in the range from 10% to 60%. This predetermined distance may be determined as a function of the type of plant which is grown on the carrier 10, so that optimum cultivation of the plant becomes possible. For some plants, it is advantageous to immerse the bottom side of the plant in the water, while, for other plants, it is advantageous to keep the bottom side of the plant a certain distance above the water surface so that the roots first have to grow a certain amount in the air above the water surface. In the case of these latter plants, it is thus advantageous to provide the stopper 70 at a certain distance above the bottom side of the mounting wall 22. In this case, it is also possible to take into account the weight and/or the increasing weight of the plant 2 during cultivation of the plant on the carrier 10, as a result of which the bottom side of the pressure in the gas in the air chamber 40 will increase and the carrier 10 will sink slightly deeper into the water.

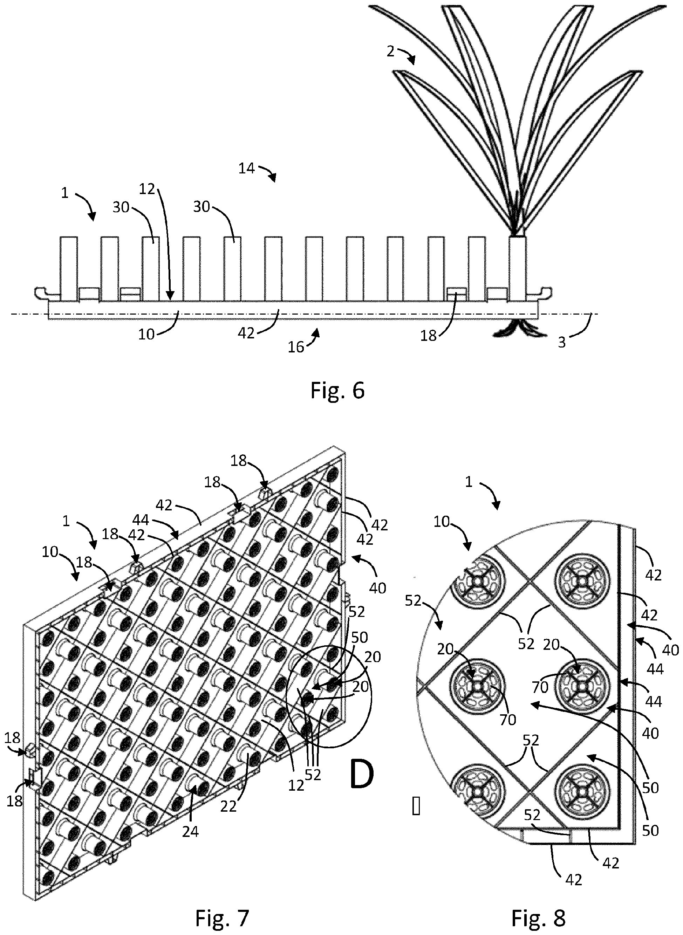

Fig. 6 shows a side view of the embodiment of the device 1 according to Figs. 1 to 5. As can be seen, the length, or the height, of the plant containers 30 is greater than the height of the carrier 10, or the length, or height of the plant 2 itself. In other words, the embodiment of the device 1 is suitable for cultivating elongate plants 2 which use elongate plant containers 30 in order to keep the plant stable in an upright position on the carrier 10. In this case, a stable device may be produced by using a panel-shaped carrier 10 which can achieve a sufficiently great buoyancy and stability by means of gastight air chambers 40 on the bottom side of the top wall 12 while using a minimum of material for manufacturing the carrier 10 and with a relatively limited height for the panel-shaped carrier 10 itself. It will be clear that the height of the carrier 10 is smaller than the height of the plant container 30 and the plant 2. The height of the carrier 10 is, for example, in the range of 20% or less, preferably 10% or less, of the height of the plant container 30 and/or the plant 2. In this way, a carrier 10 with a relatively large surface area with a large number of plant containers 30 per carrier 10 can be used, so that the floating cultivation of the plants can be carried out in an efficient manner.

Fig. 7 shows a perspective view on the bottom side of an alternative embodiment of a device 1, similar to that described above. Similar elements are denoted by similar reference numerals and function in a similar way to that described above. In the illustrated position in Fig. 7, the device 1 does not yet contain plant containers 30 which can be placed in the mounting openings 20. In contrast with the above-described embodiments, the air-chamber periphery 44 is double-walled or, in other words, the carrier 10 comprises two air chambers 40 arranged inside one another which are surrounded by an air-chamber periphery 44 with air-chamber walls 42. This can be seen more clearly in Fig. 8 which shows a detail D from Fig. 7 on an enlarged scale. In addition, it is also clear that, in this embodiment, a plurality of the connected air-chamber segments 50 enclose two mounting openings 20 by means of air-chamber segment walls 52 which are diagonally arranged with respect to the air-chamber walls 42 on the bottom side of the top wall 12.

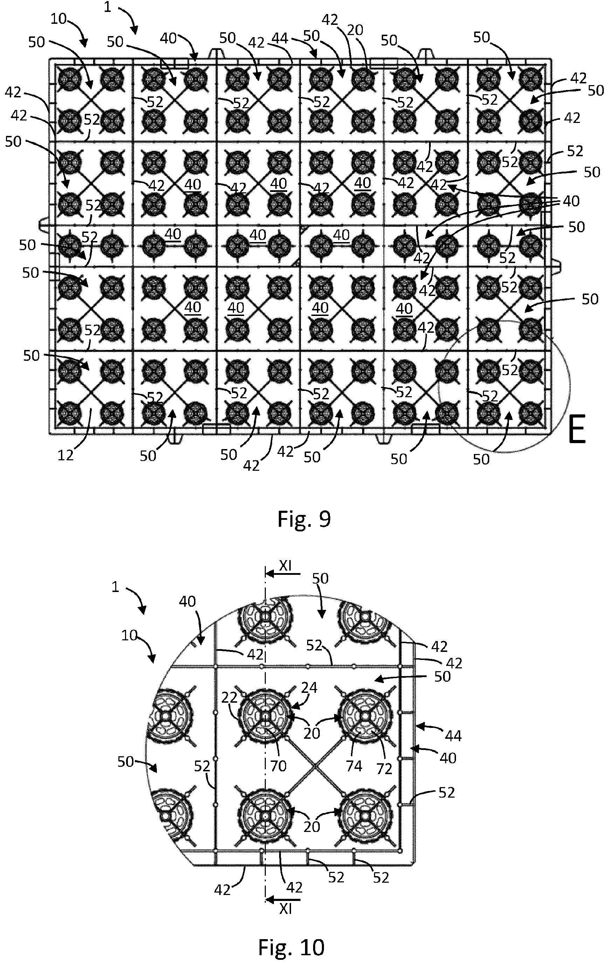

Fig. 9 shows a bottom view of yet another variant embodiment of a device similar to the above-described device, in which similar elements are denoted by similar reference numerals and function in a similar way to that described above. In a similar way to the embodiment from Figs. 7 and 8, this embodiment comprises an air chamber 40 with a double-walled air-chamber periphery 44 surrounding the periphery of the top wall 12 of the carrier 10. It will furthermore be clear that a zone is provided near this periphery in which connected air-chamber segments 50 are present which each surround four mounting openings 20. Two of the air-chamber segments 50 which are situated centrally along the width in each case surround only two mounting openings 20. These air-chamber segments 50 are connected to each other by means of an air-chamber segment wall 52 which has a depth, or height, which is smaller than the depth, or height, of the air-chamber walls 42. All air-chamber segment walls 52 have been designated by their reference numeral in Fig. 9. All other walls have the same depth, or height, as the air-chamber walls 42 and thus form additional air chambers 40 in the central part of the top wall 12 which are surrounded by air-chamber walls 42. This means that, in the surface between the periphery and a certain distance from the periphery of the top wall 12, this distance being configured in order to allow the presence of at least one mounting opening 20, according to the illustrated exemplary embodiment two mounting openings 20, an air chamber 40 with connected air-chamber segments 50 is present and optionally, as in the illustrated exemplary embodiment, one or more air chambers 40 without connected air-chamber segments 50 are present in the central part of the top wall 12 which is surrounded by this surface near the periphery.

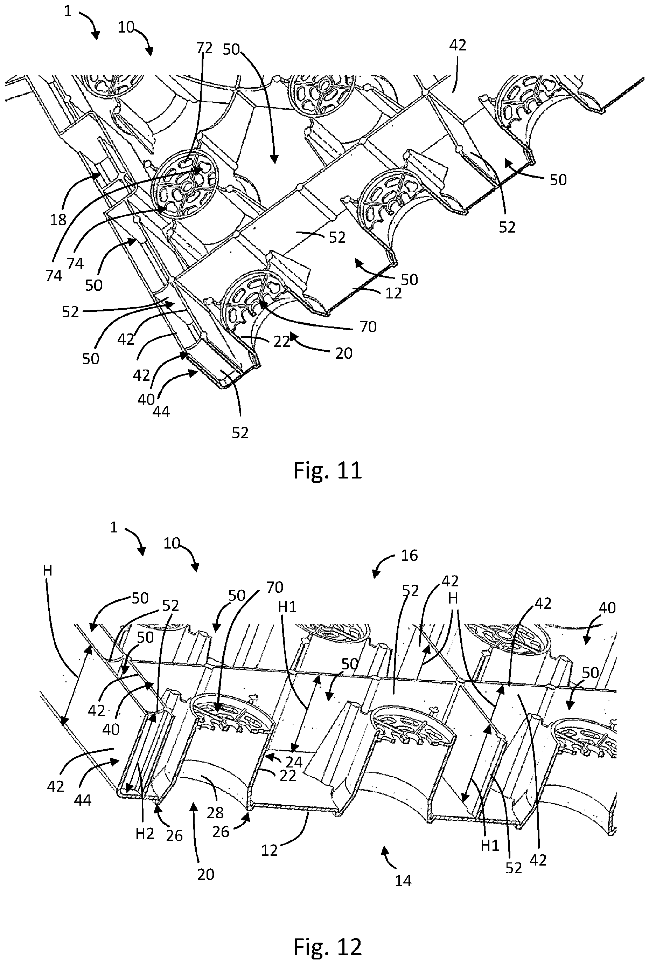

As can best be seen in Fig. 12, with this embodiment of the carrier 10, the mounting openings 20 on the top wall 12 are surrounded by an upright edge 26. In other words, as is illustrated, an edge 26 around the periphery of the mounting opening 20 on the top side of the top wall 12. This optional upright edge is configured to prevent the ingress of water from the top side of the top wall 12 into the mounting opening 20. In addition, it can also clearly be seen in Fig. 12 that, in a way similar to the preceding embodiments, the mounting openings 20 on the top wall 12 are surrounded by a guide element 28. According to the illustrated embodiment, this guide element 28 is designed as a conical or tapering top part of the mounting wall 22 which forms the mounting periphery 24 of the mounting openings 20. It will be clear that this makes it possible to insert removable plant carriers 30 efficiently into the mounting opening 20 and to guide them to the narrower cylindrical part of the mounting wall 22 by means of which the plant carriers 30, in the mounted position, can be held on the carrier 10 so as to be removable. It will be clear that alternative embodiments may comprise the optional guide element 28, which is configured to guide the plant container 30 towards the opening 20 during introduction.

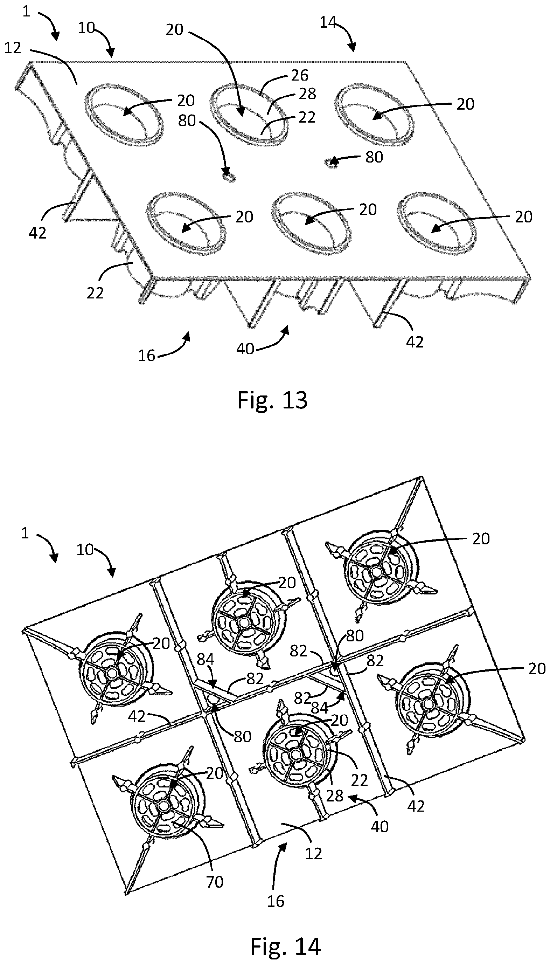

Figs. 13 and 14 show a perspective view of the top side 14 and bottom side 16, respectively, of a further alternative embodiment, similar to that described above, in which similar elements are denoted by similar reference numerals and function in a similar way. According to this embodiment, the device 1 furthermore comprises drainage openings 80 which are provided in the top wall 12 separately from the mounting openings 20. Preferably, these drainage openings 80 have smaller dimensions and/or their number is smaller than that of the mounting openings 20. These drainage openings 80 ensure that the rainwater falling on the top wall 12 can flow away via these drainage openings 80 instead of via the mounting openings 20, in particular when the mounting openings 20 are provided with an upright edge 26. This is advantageous since in this way, the additional weight due to, for example, rainwater which collects on top of the top wall 12 is minimized, and also because in this way any pollution which collects on top of the top wall 12 is discharged via the drainage openings 80 and does not come into contact with the plant 2 which is situated in the mounting openings 20. In order to keep the gastight air chamber 40 gastight, one or more downwardly directed drainage walls 82 which are provided on the top wall 12 and form a drainage periphery 84 for the drainage opening 80 have to be provided in a way similar to that of the mounting openings 20. The at least one gastight air chamber 40, in a state in which the panel-shaped carrier 10 is floating on a water surface, is sealed from the drainage openings 80 in a gastight manner by means of these downwardly directed drainage walls 82 which form a drainage periphery 84. In a way similar to the mounting walls 82, these drainage walls 82 may have, for example, a depth, or height, which is equal or similar to the depth, or height, of the air-chamber walls 42. In other words, in the state floating on the water surface, the entire drainage periphery 84 will be situated in the water surface 3.

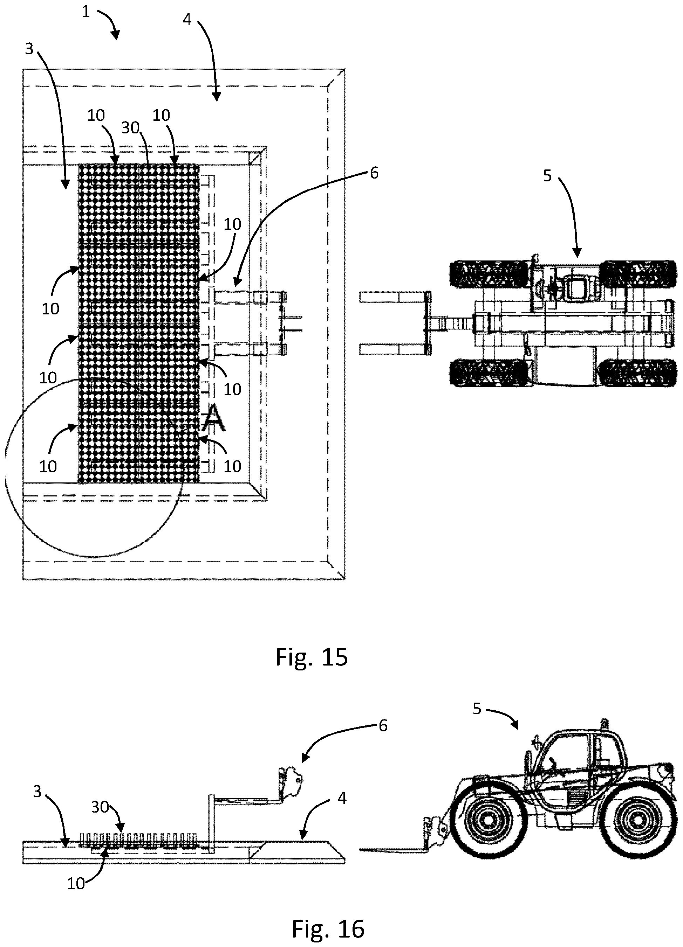

Fig. 15 shows a device 1 which comprises several carriers 10 containing plant containers 30 placed thereon and the use thereof on a water surface 3 of a basin 4. Although alternative embodiments are possible in which the basin is used in a covered or indoor installation, according to the illustrated exemplary embodiment, the basin 4 is installed in an open-air installation in the open air. By way of example, a vehicle 5 is illustrated which may be used to lift several carriers 10 in to and/or out of the basin 4 by means of a suitable lifting means 6. It will be clear that alternative embodiments are possible, in which carriers 10 for the floating cultivation of plants may be used in an efficient way. It will be clear that alternative embodiments for this are possible in which a manual, automatic and/or semi-automatic treatment and/or manipulation of the carriers 10 and/or plant containers 30 is possible. Particularly with such devices 1 which are intended for the floating cultivation of plants across relatively large surface areas, an efficient and environmentally friendly production and use of both the carriers 10 and the plant containers 30 is of particular importance.

It will be clear from the above description that the one or more air chambers 40 of the carriers 10 are configured such that, when placing the carriers 10 on the water surface 3, water is able to penetrate into at least a part of the air chambers 40 until a sealed state is reached in which the water surface seals off the entire air-chamber periphery 44. Similarly, the entire mounting periphery 24 of the mounting openings 20, and the optional drainage periphery 84, will thus also enter the water surface 3, as a result of which the water surface will further seal the air chamber 40 against the loss of gas via the mounting openings 20 or the optional drainage openings 80. In the case of a possible skew position or angle with respect to the water surface 3, for example due to the placement on the water surface 3, this angle may be compensated for, at least partly, by equalizing the gas pressure in the connected air-chamber segments 50 as described above in greater detail.

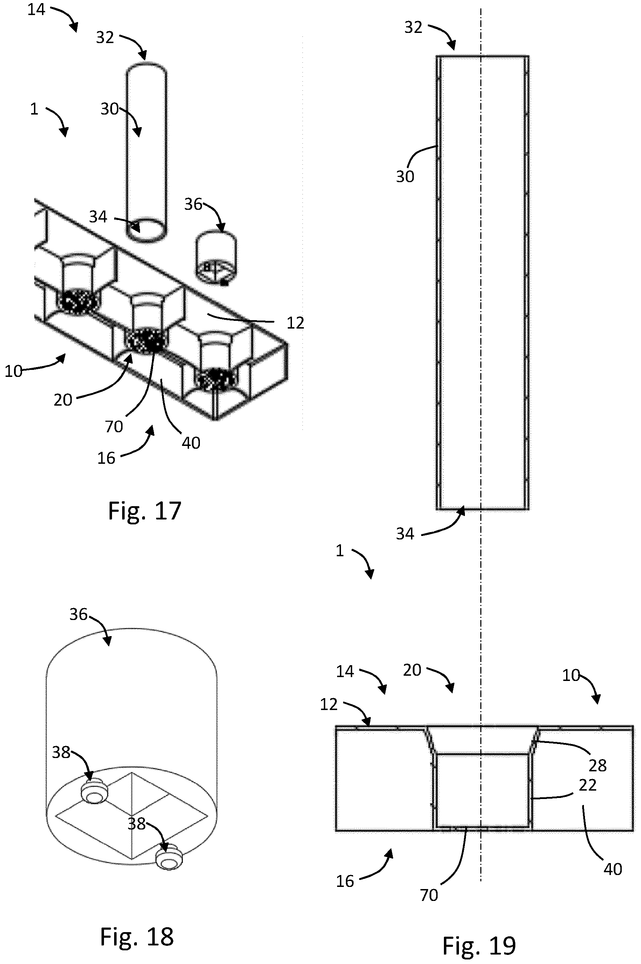

Fig. 17 shows a fragment of the embodiment of the device from Figs. 1 to 5, in which the plant container 30 is illustrated in a non-mounted position. In this case, it will be clear that, according to the illustrated exemplary embodiment, the plant container 30 preferably consists of a single piece and is manufactured, for example, as a tube section, for example made from a suitable plastic, of a certain desired length. As is illustrated, such a plant container 30 extends in an elongate manner along a central longitudinal axis which is directed upright, or upwards, in the mounted position and, according to the illustrated exemplary embodiment, the plant container 30 comprises an internal through-hole which extends between a first open end 32 which, in the mounted position, forms the top end, and a second open end 34 which, in the mounted position, forms the bottom end. Fig. 19 shows a cross section of the embodiment of the plant container 30 and the carrier 10 in a position similar to that illustrated in Fig. 17 on an enlarged scale. In this case, it will be clear that the cross section from Fig. 19 is a cross section along a plane which extends along the central longitudinal axis of the plant container 30 and the corresponding mounting opening 20 of the carrier 10, and this plane is, for example, parallel to an air-chamber wall 40 of the carrier 10. According to the illustrated exemplary embodiment, as can be seen for example in Fig. 19, the cross section of the internal hole is constant along the entire length of the plant container 30 and/or identical to the cross section of the open ends 32, 34 and is circular in the illustrated exemplary embodiment. However, it will be clear that alternative embodiments are possible comprising alternative suitable forms for this cross section, such as any suitable periphery which comprises straight and/or curved segments, such as for example a polygon, an oval, etc. According to further alternative embodiments, the cross section of the internal hole may also vary along the length of the plant container 30. In this case, it will be clear that the illustrated embodiment is particularly suitable for cultivating elongate plants on the carrier 10, since such an elongate tubular plant container is able to keep an elongate plant stable in the mounted position in a mounting opening 20. According to the illustrated embodiment, no stopper, screen or lattice has to be provided in the tubular plant carrier 30 since, in the mounted position, the stopper 70 of the mounting opening 20 can support the plant container and/or the plant 2. In addition, it is also clear that preferably, as is the case with the illustrated exemplary embodiments, the device 1 does not comprise separate elements which are configured, in a mounted position, to support the plant in the plant container 30 or to support the plant container 30 in the mounting opening 20. This means that the device preferably does not comprise any separate loose components such as function as such a stopper.

In particular in the floating cultivation of leeks or similar plants, in which a part of the plant has to be screened off from incident light in order to achieve a desired colour effect, it is advantageous if this part of the plant is screened off from incident light by the plant container. It will be clear that the illustrated exemplary embodiment of the plant container can achieve this in a simple manner if the plant container is of an elongate design, so that the desired part of the leeks or any other plant is screened off from incident light. To this end, the plant container is preferably made of and/or the plant container preferably consists of a material whose light transmission is in the range of 50% or less, preferably 20% or less, for example 10% or less; and/or whose light impermeability, as expressed by means of the opacity, is in the range of 50% or more, preferably 80% or more, for example 90% or more.

It will be clear that alternative embodiments of such plant containers 30 are possible which are for example elongate and tubular and in which the length of the plant container 30 is greater than the diameter of the plant container 30. For elongate plants such as for example leeks, the length is preferably greater by a factor of two or more, preferably greater by a factor of five or more, than the diameter of the plant container 30. However, it will be clear that the device 1 may also be advantageous for the floating cultivation of alternative plants other than elongate plants, in which case the device comprises one or more plant containers 30 which are configured to be provided in the mounting openings 20.

By way of example, such an alternative plant container 36 is illustrated which is, for example, configured to hold a plant such as fennel, lettuce or the like. This embodiment is illustrated on an enlarged scale in Fig. 18, in which optional mounting elements 38 are shown which may, for example, be fastened in the mounting elements 74 of the embodiment of the stopper 70, as described above. According to the illustrated exemplary embodiment, the mounting elements 38 of the plant container 36 function in such a way that they may be removably provided in the mounting elements 74 of the stopper 70 and can subsequently also be anchored there. According to the illustrated exemplary embodiment, this may be achieved by fitting the wider parts of the mounting elements 38 through the wider part of the openings which form the mounting elements 74 of the stopper 70 and by subsequently performing the anchoring operation by rotating the plant container 36 about its central longitudinal axis, so that a narrower part of the mounting elements 38 which form the mounting elements 74 of the stopper 70 is inserted into an adjoining narrower part of the opening and the adjoining wider part of the mounting element 38 results in anchoring to the bottom side of the stopper 70. It will be clear that alternative embodiments are possible in which the mounting elements 38, 74 of the plant container 36 and the stopper 70 cooperate in such a way that they result in anchoring of the plant container 36 to the stopper 70. Such optional embodiments are advantageous if it is desired, for example when harvesting the plant, to not remove the plant container 36 from the carrier 10. With such embodiments, such anchoring ensures that the plant container 36 is not carried along, for example during removal of the plant, by a part of the plant which is situated in, on and/or through the plant container 36 and is removed from the carrier 10.

It will be clear that the carrier 10 may also be used with alternative embodiments of plant containers 30 or other removable elements which are used for the floating cultivation of plants. In addition, it will be clear that with such alternative embodiments of the plant container 30, for example a stopper or another element for holding the plant may be present in or on the plant container 30 itself.

However, it will be clear that yet other variant embodiments of the device 1 are possible in which one or more plant containers 30 are configured to be provided removably in the mounting openings 20 of a carrier 10. According to further variant embodiments, the plant containers 30 may also be designed to form a single piece with the carrier 10 or the carriers 10 may be used in such a way that plants are grown directly in the mounting openings 20, in which case the mounting openings 20 also fulfil the function of plant container 30.

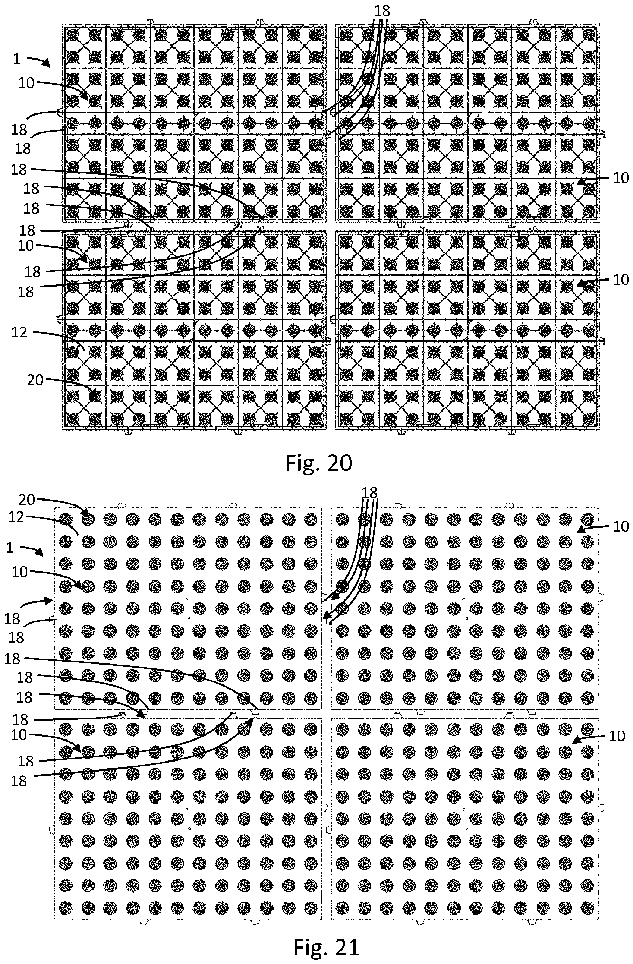

Figs. 20 and 21 show a bottom view and a top view, respectively, of an embodiment of a device 1 which comprises several carriers 10 according to an embodiment similar to that from Fig. 9, and optional coupling elements 18 which are configured to removably couple and/or hook together neighbouring carriers 10 on a water surface 3. Such coupling elements 18 are advantageous as they make it possible to place a device 1 with several carriers 10, in particular with relatively large adjoining surface areas on the water surface 3, which increases the stability of the device 1 as a whole. As a result thereof, the risk of individual carriers 10 turning over, for example due to wind loads, in particular when cultivating elongate plants in open-air installations, is reduced. In addition, this is also advantageous since the water surface is in this way entirely screened off as much as possible from sunlight, thus reducing the risk of the growth of algae. Preferably, the carriers are made from a suitable plastic which filters and/or blocks sunlight and, in particular, the ultraviolet spectrum of the sunlight. To this end, the carrier 10 is preferably made of and/or the carrier preferably consists of a material whose light transmission is in the range of 50% or less, preferably 20% or less, for example 10% or less; and/or whose light impermeability, as expressed by means of the opacity, is in the range of 50% or more, preferably 80% or more, for example 90% or more. Such coupling elements 18 may optionally be configured to make it possible to stack carriers 10 on top of each other, such as for example by means of the hook-shaped coupling elements 18 as illustrated in the embodiments from Figs. 1 to 6. However, it will be clear that numerous variant embodiments for such coupling elements 18 are possible.

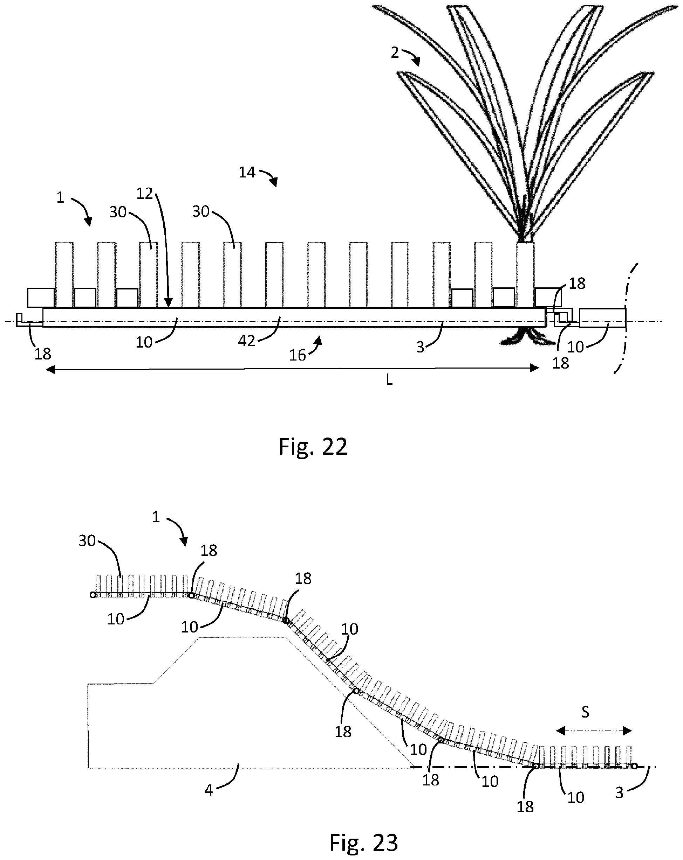

Fig. 22 shows a sideview of an alternative embodiment of a carrier 10, similar to the embodiment shown in Figure 6 and similar elements are indicated with similar references and function in a similar way as described above. Similar as described by means of Fig. 20 and 22 the carrier 10 is provided with optional coupling elements 18 which are configured to removably couple and/or hook together neighbouring carriers 10 on a water surface 3. As shown, according to this embodiment the coupling elements 18 are preferably provided at opposing sides of the carrier. According to the embodiment shown the coupling elements 18 are for example arranged at the front and back side of the carrier 10 along the length direction L of the carrier 10. However, it is clear that alternative embodiments are possible, in which for example the coupling elements 18 are arranged at the left and right side of the carrier 10, or in other words at opposing sides along the width W of the carrier. According to this embodiment the coupling elements 18 are preferably arranged at only one pair of opposing sides of the carrier 10, such as for example, as shown, only at opposing sides along the length L of the carrier 10. This is advantageous, as it allows the carriers 10 to removably couple or hook to a neighbouring carrier along one direction, while allowing movement with respect to neighbouring carriers along the transverse direction. Such embodiments allow for example the insertion and/or extraction a sequence of carriers from a basin 4, such as for example illustrated by means of the side view of Fig. 23, one row, or one column at a time. Insertion and/or extraction, the carriers 10 in such a sequential manner is beneficial, for example for allowing a sequential processing of the carriers during planting and/or harvest operations.

As further shown in Fig. 22, according to this embodiment, the coupling elements 18 are configured as an upward facing hook at one side of the carrier 10 and a downward facing hook at the opposing side of the carrier 10. It is thus clear that, according to such embodiments, the coupling elements 18 of neighbouring carriers 10 are configured such that they allow the coupling elements 18 to hook into each other such that the neighbouring carriers 10 are removably coupled to each other. According to the embodiment shown, the downward facing hook of a coupling element 18 of one carrier 10, will thus hook onto the upward facing hook of a neighbouring carrier 10, thereby coupling the carriers 10. According to a preferred embodiment, the coupling elements 18, extend along the entire length, or substantially the entire length of the side of the carrier 10, in other words the length or width of the carrier 10 respectively. This is preferable as it is clear that in this way, the water surface 3 will be covered completely by the coupling elements 18. It is clear that alternative embodiments are possible, in which the coupling elements 18 extend for example over 50% or more, 80% or more, 90% or more of the length of the side of the carrier 10 to which they are mounted. Preferably, as shown in Fig. 22, the coupling elements 18 are configured to allow a hinging movement of neighbouring carriers 10 when coupled. It is clear that the hook shaped coupling elements 18, are thus configured to provide for a gap which is wide enough, so that when coupled, the upward and downward facing hooks allow for a hinging movement of the carriers 10 while remaining coupled. It is clear that alternative embodiments are possible, in which the coupling elements 18 are configured to allow such a hinging movement, in the coupled state, between neighbouring, coupled carriers 10, such as for example any other suitably shaped coupling elements 18 that cooperate to allow a hinging movement, flexible coupling elements, etc. It is further clear that, this hinging movement allows neighbouring carriers 10 to hinge around the coupling elements 18 with respect to an axis of rotation extending along the direction of the side of the carrier 10 to which the coupling elements 18 are mounted, or in other words along the longitudinal direction of the coupling elements 18, which longitudinally extend along this side of the carrier 10, or in other words along the length direction or the width direction of the carrier 10.

As shown in Figure 23, preferably the coupling elements 18 are configured to allow an upward and downward hinging movement with respect to coupled neighbouring carrier 10. This is preferred, as for example, according to the embodiment shown, during extraction and/or insertion of a sequence of two or more carriers 10 in a coupled state into and/or out of the basin 4, typically, there will need to be traversed a height difference between the top of the edge or banks of the basin 4 and the water level 3 of the water in the basin 4.

As shown, such a preferred embodiment allows for a simple and efficient extraction of a sequence of coupled carriers 10 from the basin. According to a preferred embodiment, this could for example be an entire row, or an entire column, of a set of carriers 10 arranged in the basin. It is clear that, according to such a preferred embodiment, the coupling elements 18 are such that along neighbouring carriers 10 along the insertion or extraction direction, schematically shown as S, are hingeably and/or removably coupled to each other, and in this way thus form a sequence of two or more coupled carriers. It is clear that two or more such sequences can be arranged side by side in the basis, along the direction transverse to the insertion or extraction direction, and preferably the carriers of these sequences are configured in such a way that they allow for relative movement with respect to neighbouring sequences of carriers. In other words, these sequences coupled carriers are preferably configured such that they can be extracted independently from each other. It is clear that, according to the embodiment, described above, for example the carriers 10 are not provided with coupling elements 18 on opposing sides transverse to the insertion and/or extraction direction S, and/or are provided with coupling elements 18 that allow for a sliding movement of neighbouring carriers along the insertion and/or extraction direction S. It is clear that, in this way, an efficient insertion and/or extraction of an entire sequence of carriers is possible, in dependent of the number of coupled carriers in the sequence, thereby enabling the use of larger basins 4 in an efficient way. Further, the efficient insertion and extraction of such a sequence of coupled carriers is beneficial for subsequent sequential and/or automated processing of the carriers during for example planting and/or harvesting operations, during which the carriers need to be inserted and/or extracted from the basin 4.

According to still a further alternative embodiment, there can be provided an embodiment, similar as that shown in for example Figures 13 and 14 in which the device 1 further comprises drainage openings 80 which are provided in the top wall 12 separately from the mounting openings 20 to ensure that the rainwater falling on the top wall 12 can flow away via these drainage openings 80 instead of via the mounting openings 20, in particular when the mounting openings 20 are provided with an upright edge 26. According to an alternative embodiment, similarly as explained above, the mounting openings 20 on the top wall 12 are surrounded by an upright edge 26 around the periphery of the mounting opening 20 on the top side of the top wall 12, which is configured to prevent the ingress of water from the top side of the top wall 12 into the mounting opening 20. In other words, the edge 26 surrounding the mounting opening 20 extends to a predetermined height above the top side of the top wall 12, which will be referred to as the height of the edge 26. This height of the edge 26 of the mounting opening 20 could for example be any suitable height to suitably form a barrier against ingress of rainwater into the mounting opening, such as for example in the range of 1mm or higher, such as for example in the range of 2mm up to and including 4cm. Such as for example 4mm up to and including 2cm. According to the alternative embodiment, similar as the upright edge 26 around the periphery of the mounting opening 20, there is also provided an upright edge around the periphery of around the periphery of the top wall 12 of the carrier 10, configured to prevent egress of water from the top side of the top wall 12 along the sides of the carrier 10. In this way water, for example from rain, falling onto a carrier is prevented from moving towards adjacent carriers, thereby compartmentalising the accumulation of that water to the carrier on which it falls, and preventing the risk of accumulation of water from a plurality of carriers towards a particular carrier of a system. In this way the added weight of the water falling onto the carriers is more evenly spread. The height of the upright edge around the periphery of the top wall 12, according to some embodiments could be similar or higher, but preferably lower than the upright edge 26 of the mounting openings 20, to prevent ingress of accumulating water into the mounting openings 20. According to still a further alternative embodiment, also the drainage openings 80 could be provided with an upright edge surrounding the drainage opening, configured to allow a predetermined amount of water to accumulate on the top wall 12 of the carrier 10, before it reaches the drainage openings 80 over the surrounding edge. Preferably the upright edge surrounding the periphery of the drainage openings 80 has a height that is lower than the edge 26 surrounding periphery of the mounting openings 20. Preferably the upright edge surrounding the periphery of the drainage openings 80 has a height that is lower than the edge surrounding the periphery of the top wall 12 of the carrier 10. According to some embodiments the height of the upright edge surrounding the periphery of the drainage openings is for example in the range of 0,5mm up to and including 1cm, for example, 1mm, up to and including 5mm, for example 2mm or 3mm. According to some embodiments, the upright edge around the periphery of the drainage openings 80 could be provided with a fixed height and could optionally be manufactured in a similar way as explained above with reference to upright edge 26. However, it is clear that alternative embodiments are possible, in which for example the edge surrounding the drainage openings 80 or the top wall 12 are provided by means of different elements, such as for example a ringlet, the application of a suitable material, barrier, or element on top of the top wall 12, etc. According to a particularly preferable embodiment, the height of the upright edge surrounding the periphery of the drainage openings 80 is adjustable in height. This allows the amount of water that is retained on the top wall 12 to be adjusted, for example depending on the climatological conditions, seasonal variations, etc. According to such embodiments, the height could for example be adjusted by means of any suitable means, for example by attaching a stack of a suitable number of ringlets or any other suitable element around drainage opening, by mounting ringlets or any other suitable elements with a different height around the drainage opening on the to wall, by mounting an element of which the height is adjustable, such as for example an cylindrical element screwed or movably provided in the drainage opening 80 at the top wall 12, etc. Such embodiments, in which not all the water, such as rain, falling on the top wall 12 is drained via the drainage openings 80, but in which there is left a suitable and controllable amount of water on the top wall 12 provide for the advantage that this amount of water accumulated on the top wall 12 can be removed by evaporation. Depending on climatic conditions this might be advantageous, as in this way the amount of water falling on the top wall 12 of the carriers that is drained to the water 3 in the basin 4 is reduced, thereby allowing for a more controlled variation in the level of the water 3 in the basin 4 caused by for example rain falling on the carriers. Such an improved control of the variation of the level of the water 3 in the basis 4 can be advantageous in certain climatic conditions as it prevents an undesired dilution of the nutrients in the water 3 and/or the need to reduce the water level 3 by for example releasing water from the basin and the associated lass of nutrients.

Some aspects of the above-described embodiments, such as for example the stopper 70, the drainage openings 80 as well as other elements in relation to the carrier 10 may also be advantageous in an embodiment of the carrier 10 in which no connected air-chamber segments 50 are present.

It is clear that in the context of this description mounting openings, mounting walls, mounting periphery could also be referred to as attachment openings, attachment walls, attachment periphery or any other suitable way, and refer to openings for removably mounting or attaching a plant container or a plant, and their corresponding walls and periphery. It is further clear, that, when in the context of this description there is referred to elements, such as for example air-chamber walls, which are provided to other elements, such as for example the top wall, this could also be referred to as elements fitted to, attached to, connected to, extending from such other elements.

It will be clear that numerous further combinations and/or variant embodiments are possible without departing from the scope of protection as defined in the claims.

## Claims

1. Device (1) for the floating cultivation of a plant (2), the device (1) comprising:
- a panel-shaped carrier (10) comprising:
- a top wall (12);
- mounting openings (20) in the top wall;
- at least one gastight air chamber (40) which, in a state in which the panel-shaped carrier (10) is floating on a water surface:
- is surrounded in a gastight manner by one or more downwardly directed air-chamber walls (42) which are provided to the top wall (12) and which form an air-chamber periphery (44); and
- is sealed in a gastight manner from the mounting openings (20) by means of downwardly directed mounting walls (22) which form a mounting periphery (24);
- is sealed in a gastight manner at the top side by the top wall (12);
- is sealed in a gastight manner at the bottom side by the water surface (3) in which the entire air-chamber periphery (44) is placed,
**CHARACTERIZED IN THAT**
at least one of the gastight air chambers (40) comprises two or more connected air-chamber segments (50) which are separated from each other by one or more downwardly directed air-chamber segment walls (52) which are provided to the top wall (12), and wherein at least one air-chamber segment wall (52) is configured such that, in the floating state, the air pressure in connected air-chamber segments (50) can equalize.

2. Device according to claim 1, in which, in a sealed state in which the water surface seals the entire air-chamber periphery (44):
- the air chamber (40) is configured such that the amount of gas in the air chamber (40) remains constant; and
- at least one air-chamber segment wall (52) of the connected air-chamber segments (50) is configured such that an amount of gas can be exchanged between the connected air-chamber segments (50).

3. Device according to claim 1 or 2, in which at least one air-chamber segment wall (52) of the connected air-chamber segments (50):
- comprises an opening (60) and/or a duct which is configured to exchange gas between the connected air-chamber segments (50); and/or
- comprises at least a part which extends less far downwards from the top wall than the minimum depth of the air-chamber periphery (44).

4. Device according to one or more of the preceding claims, in which a stopper (70) is provided in and/or on the mounting walls (22) of the mounting opening (20) and is configured to limit the maximum depth to which a plant container (30) can be inserted into the mounting opening (20).

5. Device according to claim 4, in which:
- at least the stopper (70) and the mounting walls (22) of the mounting opening (20) are made as a single piece;
- the carrier (10) is made as a single piece;
- the stopper (70) is furthermore configured to, in a mounted position, support the plant in the plant container (30) provided in the mounting opening (20); and/or
- the device (1) does not comprise separate elements which are configured to support, in a mounted position, the plant in the plant container (30) and/or the plant container (30) in the mounting opening (20).

6. Device according to claim 4 or 5, in which the stopper (70) is provided:
- at a predetermined distance from the top end of the top wall (12);
- in a floating state, at a predetermined distance from the water surface; and/or
- on or at a predetermined distance from the bottom end of the opening periphery (24) of the opening (20).

7. Device according to claim 6, in which the predetermined distance:
- is determined as a function of the plant which is placed in the plant container (30); and/or
- is in the range from 5% to 500% of the height of the air-chamber periphery (44) of the air chamber (40) of the carrier (10), for example in the range from 10% to 150%.

8. Device (1) according to one or more of claims 4 to 7, in which the stopper (70) comprises:
- one or more openings (72) for the water surface and/or which provide a passage to the water surface;
- a lattice with one or more openings (72); and/or
- one or more mounting elements (74) configured for mounting the plant container (30).

9. Device according to one or more of the preceding claims, in which the mounting openings (20) in the top wall (12) are surrounded by an upright edge (26) which is configured to prevent the ingress of water from the top side of the top wall (12) into the mounting opening (20); and/or
the mounting openings (20) in the top wall (12) comprise a guide element (28) and/or are surrounded by a guide element (28) which is configured to guide a plant container (30) towards the opening (20) during its introduction.

10. Device according to one or more of the preceding claims, in which the device (1) furthermore comprises:
- one or more drainage openings (80) which are provided in the top wall (12) separately from the mounting openings (20); and
- one or more downwardly directed drainage walls (82) which are provided on the top wall (12) and form a drainage periphery (84) for the drainage opening (80), and in which the at least one gastight air chamber (40), in a state in which the panel-shaped carrier (10) is floating on a water surface, is sealed from the drainage openings (80) in a gastight manner by means of the downwardly directed drainage walls (82) which form a drainage periphery (84).

11. Device according to one or more of the preceding claims, in which the one or more air chambers (40) are configured such that, when placing the carrier (10) on the water surface, water is able to penetrate into at least a part of the air chambers (40) until a sealed state is reached in which the water surface seals the entire air-chamber periphery (44).

12. Device according to one or more of claims 1 to 3, in which the device (1) furthermore comprises one or more plant containers (30) which are configured to be provided in the mounting openings (20).

13. Device according to claim 12, in which the plant container (30):
- is elongate and tubular and in which the length of the plant container (30) is greater than the diameter of the plant container (30), for example greater by a factor of two or more, preferably greater by a factor of five or more;
- consists of one piece; and/or
- does not comprise a stopper, screen and/or lattice which is configured to support the plant in the secured state.

14. Device according to one or more of the preceding claims, in which the device (1) comprises one or more carriers (10), preferably two or more carriers (10), in which the carrier (10) comprises coupling elements (18) which are configured to removably couple and/or hook together neighbouring carriers (10) on a water surface (3).

15. Method for manufacturing, assembling and/or installing a device (1) according to one or more of the preceding claims, in which the carrier (10) is produced as a single piece.

## Patentansprüche

1. Vorrichtung (1) zur schwimmenden Kultivierung einer Pflanze (2), wobei die Vorrichtung (1) Folgendes umfasst:
- einen plattenförmigen Träger (10), umfassend:
- eine obere Wand (12);
- Montageöffnungen (20) in der oberen Wand;
- mindestens eine gasdichte Luftkammer (40), die, in einem Zustand, in dem der plattenförmige Träger (10) auf einer Wasserfläche schwimmt:
- in einer gasdichten Weise von einer oder mehreren nach unten gerichteten Luftkammerwänden (42) umgeben ist, die an der oberen Wand (12) bereitgestellt sind und die einen Luftkammerumfang (44) bilden; und
- in einer gasdichten Weise von den Montageöffnungen (20) mittels nach unten gerichteter Montagewände (22) abgedichtet ist, die einen Montageumfang (24) bilden;
- in einer gasdichten Weise an der Oberseite durch die obere Wand (12) abgedichtet ist;
- in einer gasdichten Weise an der Unterseite durch die Wasserfläche (3) abgedichtet ist, in welcher der gesamte Luftkammerumfang (44) platziert ist,
**DADURCH GEKENNZEICHNET, DASS**
mindestens eine der gasdichten Kammern (40) zwei oder mehr verbundene Luftkammersegmente (50) umfasst, die durch eine oder mehrere nach unten gerichtete Luftkammersegmentwände (52) voneinander getrennt sind, die an der oberen Wand (12) bereitgestellt sind, und wobei mindestens eine Luftkammersegmentwand (52) derart ausgestaltet ist, dass, in dem schwimmenden Zustand, sich der Luftdruck in verbundenen Luftkammersegmenten (50) ausgleichen kann.

2. Vorrichtung nach Anspruch 1, wobei, in einem abdichteten Zustand, in dem die Wasserfläche den gesamten Luftkammerumfang (44) abdichtet:
- die Luftkammer (40) derart ausgestaltet ist, dass die Menge an Gas in der Luftkammer (40) konstant bleibt; und
- mindestens eine Luftkammersegmentwand (52) der verbundenen Luftkammersegmente (50) derart ausgestaltet ist, dass eine Menge an Gas zwischen den verbundenen Luftkammersegmenten (50) ausgetauscht werden kann.

3. Vorrichtung nach Anspruch 1 oder 2, wobei mindestens eine Luftkammersegmentwand (52) der verbundenen Luftkammersegmente (50):
- eine Öffnung (60) und/oder einen Kanal umfasst, der dazu ausgestaltet ist, Gas zwischen den verbundenen Luftkammersegmenten (50) auszutauschen; und/oder
- mindestens einen Teil umfasst, der sich von der oberen Wand weniger weit nach unten erstreckt als die minimale Tiefe des Luftkammerumfangs (44).

4. Vorrichtung nach einem oder mehreren der vorhergehenden Ansprüche, wobei ein Anschlag (70) in und/oder an den Montagewänden (22) der Montageöffnung (20) bereitgestellt ist und dazu ausgestaltet ist, die maximale Tiefe zu begrenzen, zu der ein Pflanzenbehälter (30) in die Montageöffnung (20) eingesetzt werden kann.

5. Vorrichtung nach Anspruch 4, wobei:
- mindestens der Anschlag (70) und die Montagewände (22) der Montageöffnung (20) einstückig hergestellt sind;
- der Träger (10) einstückig hergestellt ist;
- der Anschlag (70) ferner dazu ausgestaltet ist, in einer montierten Position die Pflanze in dem Pflanzenbehälter (30) zu stützen, der in der Montageöffnung (20) bereitgestellt ist; und/oder
- die Vorrichtung (1) keine separaten Elemente umfasst, die dazu ausgestaltet sind, in einer montierten Position die Pflanze in dem Pflanzenbehälter (30) und/oder den Pflanzenbehälter (30) in der Montageöffnung (20) zu stützen.

6. Vorrichtung nach Anspruch 4 oder 5, wobei der Anschlag (70) bereitgestellt ist:
- in einem vorbestimmten Abstand von dem oberen Ende der oberen Wand (12);
- in einem schwimmenden Zustand, in einem vorbestimmten Abstand von der Wasserfläche; und/oder
- an oder in einem vorbestimmten Abstand von dem unteren Ende des Öffnungsumfangs (24) der Öffnung (20).

7. Vorrichtung nach Anspruch 6, wobei der vorbestimmte Abstand:
- in Abhängigkeit von der Pflanze bestimmt wird, die in dem Pflanzenbehälter (30) platziert ist; und/oder
- im Bereich von 5 % bis 500 % der Höhe des Luftkammerumfangs (44) der Luftkammer (40) des Trägers (10), zum Beispiel im Bereich von 10 % bis 150 %, liegt.

8. Vorrichtung (1) nach einem oder mehreren der Ansprüche 4 bis 7, wobei der Anschlag (70) Folgendes umfasst:
- eine oder mehrere Öffnungen (72) für die Wasserfläche und/oder die einen Durchgang zu der Wasserfläche bereitstellen;
- ein Gitter mit einer oder mehreren Öffnungen (72); und/oder
- ein oder mehrere Montageelemente (74), die zum Montieren des Pflanzenbehälters (30) ausgestaltet sind.

9. Vorrichtung nach einem oder mehreren der vorhergehenden Ansprüche, wobei die Montageöffnungen (20) in der oberen Wand (12) von einer aufrechten Kante (26) umgeben sind, die dazu ausgestaltet ist, den Eintritt von Wasser von der Oberseite der oberen Wand (12) in die Montageöffnung (20) zu verhindern; und/oder
wobei die Montageöffnungen (20) in der oberen Wand (12) ein Führungselement (28) umfassen und/oder von einem Führungselement (28) umgeben sind, das dazu ausgestaltet ist, einen Pflanzenbehälter (30) während seines Einführens hin zu der Öffnung (20) zu führen.

10. Vorrichtung nach einem oder mehreren der vorhergehenden Ansprüche, wobei die Vorrichtung (1) ferner Folgendes umfasst:
- eine oder mehrere Drainageöffnungen (80), die in der oberen Wand (12) separat von den Montageöffnungen (20) bereitgestellt sind; und
- eine oder mehrere nach unten gerichtete Drainagewände (82), die auf der oberen Wand (12) bereitgestellt sind und einen Drainageumfang (84) für die Drainageöffnung (80) bilden, und wobei die mindestens eine gasdichte Luftkammer (40), in einem Zustand, in dem der plattenförmige Träger (10) auf einer Wasserfläche schwimmt, von den Drainageöffnungen (80) in einer gasdichten Weise mittels der nach unten gerichteten Drainagewände (82) abgedichtet ist, die einen Drainageumfang (84) bilden.

11. Vorrichtung nach einem oder mehreren der vorhergehenden Ansprüche, wobei die eine oder mehreren Luftkammern (40) derart ausgestaltet sind, dass, bei Platzieren des Trägers (10) auf der Wasserfläche, Wasser in mindestens einen Teil der Luftkammern (40) dringen kann, bis ein abgedichteter Zustand erreicht ist, in dem die Wasserfläche den gesamten Luftkammerumfang (44) abdichtet.

12. Vorrichtung nach einem oder mehreren der Ansprüche 1 bis 3, wobei die Vorrichtung (1) ferner einen oder mehrere Pflanzenbehälter (30) umfasst, die dazu ausgestaltet sind, in den Montageöffnungen (20) bereitgestellt zu werden.

13. Vorrichtung nach Anspruch 12, wobei der Pflanzenbehälter (30):
- länglich und rohrförmig ist und wobei die Länge des Pflanzenbehälters (30) größer als der Durchmesser des Pflanzenbehälters (30), zum Beispiel größer um einen Faktor von zwei oder mehr, vorzugsweise größer um einen Faktor von fünf oder mehr, ist;
- aus einem Stück besteht; und/oder
- keinen Anschlag, keinen Schirm und/oder kein Gitter umfasst, das dazu ausgestaltet ist, die Pflanze in dem gesicherten Zustand zu stützen.

14. Vorrichtung nach einem oder mehreren der vorhergehenden Ansprüche, wobei die Vorrichtung (1) einen oder mehrere Träger (10), vorzugsweise zwei oder mehr Träger (10) umfasst, wobei der Träger (10) Kopplungselemente (18) umfasst, die dazu ausgestaltet sind, benachbarte Träger (10) auf einer Wasserfläche (3) entfernbar miteinander zu koppeln und/oder zu verhaken.

15. Verfahren zum Herstellen, Zusammenbauen und/oder Installieren einer Vorrichtung (1) nach einem oder mehreren der vorhergehenden Ansprüche, wobei der Träger (10) einstückig hergestellt wird.

## Revendications

1. Dispositif (1) pour la culture flottante d'une plante (2), le dispositif (1) comprenant :
- un support en forme de panneau (10) comprenant :
- une paroi supérieure (12) ;
- des ouvertures de montage (20) dans la paroi supérieure ;
- au moins une chambre à air étanche aux gaz (40) qui, dans un état où le support en forme de panneau (10) est en train de flotter sur une surface d'eau :
- est entourée de manière étanche aux gaz par une ou plusieurs parois de chambre à air (42), dirigées vers le bas, qui sont prévues sur la paroi supérieure (12) et qui forment une périphérie de chambre à air (44) ; et
- est scellée de manière étanche aux gaz, par rapport aux ouvertures de montage (20), au moyen de parois de montage (22), dirigées vers le bas, qui forment une périphérie de montage (24) ;
- est scellée de manière étanche aux gaz sur le côté supérieur par la paroi supérieure (12) ;
- est scellée de manière étanche aux gaz sur le côté inférieur par la surface d'eau (3) dans laquelle la périphérie entière de chambre à air (44) est placée,
**caractérisé en ce que**
au moins une des chambres à air étanches aux gaz (40) comprend deux, ou plus, segments de chambre à air reliés (50) qui sont séparés les uns des autres par une ou plusieurs parois de segment de chambre à air (52), dirigées vers le bas, qui sont prévues sur la paroi supérieure (12), et dans lequel au moins une paroi de segment de chambre à air (52) est configurée de telle sorte que, dans l'état flottant, la pression d'air dans des segments de chambre à air reliés (50) puisse s'égaliser.

2. Dispositif selon la revendication 1, dans lequel, dans un état scellé dans lequel la surface d'eau scelle la périphérie entière de chambre à air (44) :
- la chambre à air (40) est configurée de telle sorte que la quantité de gaz dans la chambre à air (40) reste constante ; et
- au moins une paroi de segment de chambre à air (52) des segments de chambre à air reliés (50) est configurée de telle sorte qu'une quantité de gaz puisse être échangée entre les segments de chambre à air reliés (50).

3. Dispositif selon la revendication 1 ou 2, dans lequel au moins une paroi de segment de chambre à air (52) des segments de chambre à air reliés (50) :
- comprend une ouverture (60) et/ou une conduite qui est configurée pour échanger du gaz entre les segments de chambre à air reliés (50) ; et/ou
- comprend au moins une partie qui s'étend moins loin vers le bas de la paroi supérieure que la profondeur minimale de la périphérie de chambre à air (44).

4. Dispositif selon une ou plusieurs des revendications précédentes, dans lequel une butée (70) est prévue dans et/ou sur les parois de montage (22) de l'ouverture de montage (20) et est configurée pour limiter la profondeur maximale jusqu'à laquelle un récipient pour plante (30) peut être inséré dans l'ouverture de montage (20).

5. Dispositif selon la revendication 4, dans lequel :
- au moins la butée (70) et les parois de montage (22) de l'ouverture de montage (20) sont réalisées sous forme monopièce ;
- le support (10) est réalisé sous forme monopièce ;
- la butée (70) est en outre configurée pour, dans une position montée, supporter la plante dans le récipient pour plante (30) prévu dans l'ouverture de montage (20) ; et/ou
- le dispositif (1) ne comprend pas d'éléments séparés qui sont configurés pour supporter, dans une position montée, la plante dans le récipient pour plante (30) et/ou le récipient pour plante (30) dans l'ouverture de montage (20).

6. Dispositif selon la revendication 4 ou 5, dans lequel la butée (70) est prévue :
- à une distance prédéterminée de l'extrémité supérieure de la paroi supérieure (12) ;
- dans un état flottant, à une distance prédéterminée de la surface d'eau ; et/ou
- sur, ou à une distance prédéterminée de, l'extrémité inférieure de la périphérie d'ouverture (24) de l'ouverture (20).

7. Dispositif selon la revendication 6, dans lequel la distance prédéterminée :
- est déterminée en fonction de la plante qui est placée dans le récipient pour plante (30) ; et/ou
- est dans la plage de 5 % à 500 % de la hauteur de la périphérie de chambre à air (44) de la chambre à air (40) du support (10), par exemple dans la plage de 10 % à 150 %.

8. Dispositif (1) selon une ou plusieurs des revendications 4 à 7, dans lequel la butée (70) comprend :
- une ou plusieurs ouvertures (72) pour la surface d'eau et/ou qui fournissent un passage à la surface d'eau ;
- un treillis avec une ou plusieurs ouvertures (72) ; et/ou
- un ou plusieurs éléments de montage (74) configurés pour monter le récipient pour plante (30).

9. Dispositif selon une ou plusieurs des revendications précédentes, dans lequel les ouvertures de montage (20) dans la paroi supérieure (12) sont entourées par un bord vertical (26) qui est configuré pour empêcher l'entrée d'eau, du côté supérieur de la paroi supérieure (12), dans l'ouverture de montage (20) ; et/ou
les ouvertures de montage (20) dans la paroi supérieure (12) comprennent un élément de guidage (28) et/ou sont entourées par un élément de guidage (28) qui est configuré pour guider un récipient pour plante (30) vers l'ouverture (20) durant son introduction.

10. Dispositif selon une ou plusieurs des revendications précédentes, dans lequel le dispositif (1) comprend en outre :
- une ou plusieurs ouvertures de drainage (80) qui sont prévues dans la paroi supérieure (12) séparément des ouvertures de montage (20) ; et
- une ou plusieurs parois de drainage (82), dirigées vers le bas, qui sont prévues sur la paroi supérieure (12) et forment une périphérie de drainage (84) pour l'ouverture de drainage (80), et dans lequel l'au moins une chambre à air étanche aux gaz (40), dans un état où le support en forme de panneau (10) est en train de flotter sur une surface d'eau, est scellée, par rapport aux ouvertures de drainage (80), de manière étanche aux gaz, au moyen des parois de drainage (82), dirigées vers le bas, qui forment une périphérie de drainage (84).

11. Dispositif selon une ou plusieurs des revendications précédentes, dans lequel l'une ou les plusieurs chambres à air (40) sont configurées de telle sorte que, lors de la mise en place du support (10) sur la surface d'eau, de l'eau puisse pénétrer dans au moins une partie des chambres à air (40) jusqu'à ce qu'un état scellé soit atteint dans lequel la surface d'eau scelle la périphérie entière de chambre à air (44).

12. Dispositif selon une ou plusieurs des revendications 1 à 3, dans lequel le dispositif (1) comprend en outre un ou plusieurs récipients pour plante (30) qui sont configurés pour être prévus dans les ouvertures de montage (20).

13. Dispositif selon la revendication 12, dans lequel le récipient pour plante (30) :
- est allongé et tubulaire et dans lequel la longueur du récipient pour plante (30) est plus grande que le diamètre du récipient pour plante (30), par exemple plus grande d'un facteur de deux, ou plus, de préférence plus grande d'un facteur de cinq ou plus ;
- est constitué d'une pièce ; et/ou
- ne comprend pas de butée, d'écran et/ou de treillis qui est configuré pour support la plante dans l'état fixé.

14. Dispositif selon une ou plusieurs des revendications précédentes, dans lequel le dispositif (1) comprend un ou plusieurs supports (10), de préférence deux, ou plus, supports (10), dans lequel le support (10) comprend des éléments d'accouplement (18) qui sont configurés pour accoupler et/ou accrocher ensemble, de façon amovible, des supports voisins (10) sur une surface d'eau (3).

15. Procédé pour fabriquer, assembler et/ou installer un dispositif (1) selon une ou plusieurs des revendications précédentes, dans lequel le support (10) est produit sous forme monopièce.
